# EUROPEAN PATENT APPLICATION

(11) **EP 4 618 525 A1**
(43) Date of publication of application: **17.09.2025**
(21) Application number: 23930032.0
(22) Date of filing: 04.12.2023
(51) Int. Cl.: H04M 3/42

(54) **METHOD AND APPARATUS FOR IMPLEMENTING CALL PROCESS**

(30) Priority: 31.03.2023 CN 202310363493
(71) Applicant: Huawei Technologies Co., Ltd., Shenzhen, Guangdong 518129 (CN)
(72) Inventor: WU, Shisheng, Shenzhen, Guangdong 518129 (CN); LIU, Meiyuan, Shenzhen, Guangdong 518129 (CN); WANG, Dong, Shenzhen, Guangdong 518129 (CN); WU, Kanghua, Shenzhen, Guangdong 518129 (CN); SONG, Guangxin, Shenzhen, Guangdong 518129 (CN)
(74) Representative: Goddar, Heinz J.
(86) International application number: PCT/CN2023/136192
(87) International publication number: WO 2024/198466

(57) **Abstract**

This application provides a call process implementation method and an apparatus, applied to the field of communication technologies, to enrich visual and auditory experience of a user by adding an electronic gift service or a virtual item service in a calling phase or a ringing and waiting phase of the user, so as to improve user experience, and meet diversified requirements of network users. The method includes: A terminal receives a media data stream corresponding to a virtual item, where the terminal is a recipient of the virtual item; and the terminal plays media information corresponding to the virtual item in a call process, where the terminal is a terminal of a caller user of a call service or a terminal of a callee user of the call service.

## Description

This application claims priority to Chinese Patent Application No. 202310363493.4, filed with the China National Intellectual Property Administration on March 31, 2023 and entitled "CALL PROCESS IMPLEMENTATION METHOD AND APPARATUS", which is incorporated herein by reference in its entirety.

### TECHNICAL FIELD

This application relates to the field of communication technologies, and in particular, to a call process implementation method and an apparatus.

### BACKGROUND

In existing communication technologies, in a process in which a user makes a call by using a terminal, a caller terminal initiates a call request, and a callee terminal rings. In a waiting period in which a caller terminal side waits the callee terminal to answer the call, the caller terminal may play a network ring back tone, including a "beep-beep" tone without a ring back tone service, a callee audio ring back tone or video ring back tone to which the callee terminal subscribes, or a caller audio ring back tone or video ring back tone to which the caller terminal subscribes. In addition, in the call waiting period, the callee terminal may also play a call ringtone that is set on the terminal, or play a callee audio customized ringing tone or video customized ringing tone to which the callee terminal subscribes (that is, an audio/video media service in a ringing and waiting period on a callee terminal side).

The foregoing ring back tone or customized ringing tone service can enrich visual and auditory experience of the user in a calling phase or a ringing and waiting phase, to improve user experience. However, an implementation of the service is single, lacks interest, does not have a social attribute, and cannot meet diversified requirements of existing network users.

### SUMMARY

This application provides a call process implementation method and an apparatus, to enrich visual and auditory experience of a user by adding an electronic gift service or a virtual item service in a calling phase or a ringing and waiting phase of the user, so as to improve user experience, and meet diversified requirements of network users.

To achieve the foregoing objective, this application uses the following technical solutions.

According to a first aspect, a call process implementation method is provided, applied to a call session control function. The method includes: receiving a call request from a first terminal; and sending the call request to a virtual item call play platform based on subscription information of a virtual item service of the terminal, where the call request is used to trigger delivery of a virtual item to the first terminal and/or a second terminal, and the second terminal is a terminal of a callee user corresponding to the call request.

In the foregoing implementation, the virtual item service is added, so that when processing a call request of a user, the call session control function may trigger, based on a virtual item service to which the user subscribes, delivery of a subscribed virtual item to a caller terminal and/or a callee terminal corresponding to a call service. In this way, a virtual item delivery service of the terminal is implemented through a core network, and a brand new service form is provided, to enrich enjoyment of the call service, enrich visual and auditory experience of the user, improve user experience, and meet diversified requirements of network users.

In an implementation, subscription information of the virtual item is generated based on a virtual item service to which a user subscribes. The call session control function may trigger the virtual item service based on the subscription information generated when the user subscribes to the virtual item service, to implement the virtual item delivery service for the terminal.

In an implementation, the method further includes: receiving a response message for a callee ring from the second terminal; and sending the response message for the callee ring to the virtual item call play platform. After the call request is transmitted to the callee terminal, the callee terminal may feed back the callee ring, to indicate a status of the call service.

According to a second aspect, a call process implementation method is provided, applied to a virtual item call play platform. The method includes: receiving a call request, where the call request is used to trigger delivery of a virtual item to a terminal, and the terminal is a terminal of a caller user corresponding to the call request or a terminal of a callee user corresponding to the call request; and sending a media data stream corresponding to the virtual item to the terminal, where the media data stream corresponding to the virtual item is determined based on a virtual item delivery task of the terminal.

In the foregoing implementation, the virtual item call play platform is added to implement a virtual item service. When processing a call request of a user, the virtual item call play platform may trigger, based on a virtual item delivery service to which the user subscribes, delivery of a corresponding virtual item to a caller terminal and/or a callee terminal corresponding to a call service. In this way, a virtual item delivery service of the terminal is implemented through a core network, and a brand new service form is provided, to enrich enjoyment of the call service, enrich visual and auditory experience of the user, improve user experience, and meet diversified requirements of network users.

In an implementation, if the terminal is the terminal of the caller user of the call service and subscribes to a ring back tone service, or if the terminal is the terminal of the callee user of the call service and subscribes to a customized ringing tone service, the media data stream corresponding to the virtual item includes a media data stream of at least one virtual item, and further includes a media data stream corresponding to the ring back tone service or the customized ringing tone service of the terminal.

In the foregoing implementation, if the terminal subscribes to the ring back tone service or the customized ringing tone service at the same time, a network may transmit the media data stream of the virtual item and the media data stream corresponding to the ring back tone service or the customized ringing tone service to the terminal for play, to implement convergent play of a plurality of services, improve enjoyment of a call service process, and enrich user experience.

In an implementation, the sending a media data stream corresponding to the virtual item to the terminal specifically includes: performing real-time transcoding and overlaying on a plurality of media data streams corresponding to the terminal to obtain a visual media data stream and/or an audio data stream, where the visual media data stream includes a visual media data stream of at least one virtual item and a visual media data stream corresponding to the ring back tone service or the customized ringing tone service of the terminal, and the audio data stream includes an audio data stream of at least one virtual item and an audio data stream corresponding to the ring back tone service or the customized ringing tone service of the terminal; and sending the visual media data stream and/or the audio data stream to the terminal.

In the foregoing implementation, if the terminal subscribes to the ring back tone service or the customized ringing tone service at the same time, a network may perform real-time transcoding and overlaying on the media data stream of the virtual item and the media data stream corresponding to the ring back tone service or the customized ringing tone service to obtain a media data stream, which may include an overlaid visual media data stream and/or an overlaid audio data stream. The overlaid media data stream is transmitted to the terminal and played, to implement convergent play of a plurality of services, improve enjoyment of a call service process, and enrich user experience.

In an implementation, the sending a media data stream corresponding to the virtual item to the terminal specifically includes: sending the media data stream corresponding to the virtual item to the terminal through a data channel DC.

In the foregoing implementation, the data channel DC may be further used to implement transmission of virtual item media data, that is, a plurality of media data streams may be separately transmitted through the data channel, thereby enriching manners of multi-service overlaid play, for example, pop-up window play or floating play, enriching virtual item presentation manners, and improving communication efficiency.

In an implementation, the method further includes: completing data channel DC negotiation with the terminal, and sending, to the terminal through the DC channel, a first application used to implement a virtual item service; and establishing the DC channel with the terminal, to send the media data stream corresponding to the virtual item to the terminal.

In the foregoing implementation, the network completes data channel negotiation with the terminal, delivers the application, transmits the media data stream of the virtual item through the data channel, so that the virtual item is played by using the delivered application. This implementation is flexible.

In an implementation, the virtual item call play platform includes an application server AS of the virtual item service, a virtual item media service, and a virtual item delivery control service. The virtual item call play platform may implement functions of the virtual item call play platform by using a plurality of logical network elements. The plurality of logical network elements may be deployed on one physical network element, or may be separately deployed on different physical network elements, to implement the functions implemented by the virtual item call play platform.

In an implementation, the virtual item call play platform is implemented by a call play platform of the video ring back tone service, implemented by a call play platform of the video customized ringing tone service, or implemented by a call play platform based on an internet protocol multimedia subsystem IMS voice service.

In the foregoing implementation, the virtual item call play platform may implement the virtual item service by using a newly added call play platform, or by using a call play platform of an existing service through function extension, for example, a call play platform of a ring back tone service or a customized ringing tone service, to reduce a quantity of network elements in the network and improve communication efficiency.

In an implementation, the media data stream corresponding to the virtual item includes at least one of the following content: information about a user who gifts the virtual item, a name of the virtual item, blessing information, an animation of the virtual item, a special effect, a red packet, an interaction operation, or a closing operation.

According to a third aspect, a call process implementation method is provided, applied to an application server AS of a virtual item service. The method includes: receiving a call request and a response message for a callee ring, where the call request is used to trigger delivery of a virtual item to a terminal, and the terminal is a terminal of a caller user corresponding to the call request or a terminal of a callee user corresponding to the call request; and sending a query request to a virtual item delivery control service, where the query request is used to query whether to deliver the virtual item to the terminal.

In an implementation, the method further includes: receiving a query response from the virtual item delivery control service.

In an implementation, the query response further includes information about a to-be-delivered virtual item.

In an implementation, the method further includes: requesting a virtual item media service to query media information of the to-be-delivered virtual item; and receiving a response from the virtual item media service, where the response indicates the media information of the to-be-delivered virtual item.

In an implementation, the method further includes: sending a play notification to the virtual item media service, where the play notification indicates to play the virtual item for the terminal.

According to a fourth aspect, a call process implementation method is provided, applied to a virtual item delivery control service. The method includes: receiving a query request from an application server AS of a virtual item service, where the query request is used to query whether to deliver a virtual item to a terminal; and determining, based on a virtual item delivery task, whether to deliver the virtual item to the terminal.

In an implementation, the method further includes: sending a query response to the AS of the virtual item service.

In an implementation, the query response further includes information about a to-be-delivered virtual item.

According to a fifth aspect, a call process implementation method is provided, applied to a virtual item media service. The method includes: receiving a media query request from an application server AS of a virtual item service, where the media query request includes information about a terminal; and sending a media data stream corresponding to a to-be-delivered virtual item to the terminal, where the media data stream corresponding to the virtual item is determined based on a virtual item delivery task of the terminal.

In an implementation, the method further includes: sending a response to the AS of the virtual item service, where the response indicates media information of the to-be-delivered virtual item.

In an implementation, the method further includes: receiving a play notification from the AS of the virtual item service, where the play notification indicates to play the to-be-delivered virtual item for the terminal.

In an implementation, the media data stream corresponding to the virtual item includes at least one of the following content: information about a user who gifts the virtual item, a name of the virtual item, blessing information, an animation of the virtual item, a special effect, a red packet, an interaction operation, or a closing operation.

According to a sixth aspect, a call process implementation method is provided, applied to a terminal. The method includes: receiving a media data stream corresponding to a virtual item, where the virtual item includes information about a user who gifts the virtual item, and an animation or a special effect of the virtual item; and playing, by the terminal, media information corresponding to the virtual item in a call process, where the terminal is a terminal of a caller user of a call service or a terminal of a callee user of the call service.

In the foregoing implementation, in a call service process, the terminal may receive and play the virtual item, to implement a service of delivering the virtual item to the terminal by a network, so as to enrich enjoyment of the call service on a terminal side, enrich visual and auditory experience of the user, improve user experience, and meet diversified requirements of network users.

In an implementation, the media data stream corresponding to the virtual item includes at least one of the following content: information about a user who gifts the virtual item, a name of the virtual item, blessing information, an animation of the virtual item, a special effect, a red packet, an interaction operation, or a closing operation. The virtual item delivered by the network to the user on the terminal side may include but is not limited to the foregoing content, thereby implementing blessing transfer between users, increasing a function of a social attribute, and enriching user experience.

In an implementation, the playing, by the terminal, media information corresponding to the virtual item specifically includes: playing, by the terminal, the media information corresponding to the virtual item in a call ringing and waiting period and/or a call period in which a call is connected. The network delivers the virtual item to the user on the terminal side, including but not limited to a call waiting period and a call process, thereby enriching implementation scenarios and implementation flexibility of virtual item delivery and enriching user experience.

In an implementation, the media data stream corresponding to the virtual item includes a media data stream of at least one virtual item, and further includes a media data stream corresponding to a ring back tone service or a customized ringing tone service of the terminal.

Specifically, if the terminal is the terminal of the caller user of the call service and subscribes to a ring back tone service, the media data stream corresponding to the virtual item includes a media data stream of at least one virtual item, and further includes the ring back tone service of the terminal; or if the terminal is the terminal of the callee user of the call service and subscribes to a customized ringing tone service, the media data stream corresponding to the virtual item includes a media data stream of at least one virtual item, and further includes a media data stream corresponding to the customized ringing tone service.

In the foregoing implementation, if the terminal subscribes to the ring back tone service or the customized ringing tone service at the same time, a network may transmit the media data stream of the virtual item and the media data stream corresponding to the ring back tone service or the customized ringing tone service to the terminal for play, to implement convergent play of a plurality of services, improve enjoyment of a call service process, and enrich user experience.

In an implementation, the receiving, by the terminal, a media data stream corresponding to a virtual item specifically includes: receiving, by the terminal, a converged data stream from a virtual item media service, where the converged data stream includes the media data stream of the at least one virtual item, and further includes the media data stream corresponding to the ring back tone service or the customized ringing tone service of the terminal.

In the foregoing implementation, if the terminal subscribes to the ring back tone service or the customized ringing tone service at the same time, a network may perform real-time transcoding and overlaying on the media data stream of the virtual item and the media data stream corresponding to the ring back tone service or the customized ringing tone service to obtain a media data stream, which may include an overlaid visual media data stream and/or an overlaid audio data stream. The overlaid media data stream is transmitted to the terminal and played, to implement convergent play of a plurality of services, improve enjoyment of a call service process, and enrich user experience.

In an implementation, the receiving, by the terminal, a media data stream corresponding to a virtual item specifically includes: receiving, by the terminal, the media data stream corresponding to the virtual item from the virtual item media service through a data channel DC. In the foregoing implementation, the data channel DC may be further used to implement transmission of virtual item media data, that is, a plurality of media data streams may be separately transmitted through the data channel, thereby enriching manners of multi-service overlaid play, for example, pop-up window play or floating play, enriching virtual item presentation manners, and improving communication efficiency.

In an implementation, the method further includes: completing, by the terminal, data channel DC negotiation, and receiving, through the DC channel, a first application used to implement a virtual item service; establishing, by the terminal, the DC channel with the virtual item media service; and after receiving the media data stream corresponding to the virtual item through the DC channel, playing, by the terminal, the media information corresponding to the virtual item by using the first application. In the foregoing implementation, the network completes data channel negotiation with the terminal, delivers the application, transmits the media data stream of the virtual item through the data channel, so that the virtual item is played by using the delivered application. This implementation is flexible.

In an implementation, the method further includes: ordering or subscribing to, by the terminal, the virtual item service through a virtual item operation service platform, and setting information about a recipient user, to deliver the virtual item to a terminal of the recipient user. The user may implement a virtual item ordering and gifting process by using the virtual item operation service platform (for example, a web portal or an application), to generate subscription information of the virtual item and a delivery task, and subsequently trigger a delivery procedure of the virtual item by using the call service.

In an implementation, the method further includes: setting, by the terminal through the virtual item operation service platform, at least one of a quantity of virtual item delivery times, a delivery frequency, a delivery validity period, a delivery priority, and specified play, cyclic play, or random play of a plurality of virtual items.

In an implementation, the virtual item service is implemented by an application server AS of a video ring back tone service, implemented by an AS of a video customized ringing tone service, implemented by an AS based on an internet protocol multimedia subsystem IMS voice service, or implemented by an AS of the virtual item service.

In the foregoing implementation, the virtual item call play platform may implement the virtual item service by using a newly added call play platform, or by using a call play platform of an existing service through function extension, for example, a call play platform of a ring back tone service or a customized ringing tone service, to reduce a quantity of network elements in the network and improve communication efficiency.

According to a seventh aspect, a communication apparatus is provided, including a transceiver unit, configured to receive a call request from a first terminal; and a processing unit, configured to send the call request to a virtual item call play platform based on subscription information of a virtual item service of the terminal, where the call request is used to trigger delivery of the virtual item to the first terminal and/or a second terminal, and the second terminal is a terminal of a callee user corresponding to the call request.

In an implementation, subscription information of the virtual item is generated based on a virtual item service to which a user subscribes.

In an implementation, the transceiver unit is further configured to: receive a response message for a callee ring from the second terminal; and send the response message for the callee ring to the virtual item call play platform.

According to an eighth aspect, a communication apparatus is provided, including a transceiver unit, configured to receive a call request, where the call request is used to trigger delivery of a virtual item to a terminal, and the terminal is a terminal of a caller user corresponding to the call request or a terminal of a callee user corresponding to the call request; and a processing unit, configured to determine the corresponding virtual item based on a virtual item delivery task of the terminal. The transceiver unit is further configured to send a media data stream corresponding to the virtual item to the terminal.

In an implementation, if the terminal is the terminal of the caller user of the call service and subscribes to a ring back tone service, or if the terminal is the terminal of the callee user of the call service and subscribes to a customized ringing tone service, the media data stream corresponding to the virtual item includes a media data stream of at least one virtual item, and further includes a media data stream corresponding to the ring back tone service or the customized ringing tone service of the terminal.

In an implementation, the processing unit is specifically configured to perform real-time transcoding and overlaying on a plurality of media data streams corresponding to the terminal to obtain a video data stream and/or an audio data stream, where the video data stream includes a visual media data stream of at least one virtual item and a visual media data stream corresponding to the ring back tone service or the customized ringing tone service of the terminal, and the audio data stream includes an audio data stream of at least one virtual item and an audio data stream corresponding to the ring back tone service or the customized ringing tone service of the terminal; and the transceiver unit is specifically configured to send the visual media data stream and/or the audio data stream to the terminal.

In an implementation, the transceiver unit is specifically configured to send the media data stream corresponding to the virtual item to the terminal through a data channel DC.

In an implementation, the transceiver unit is specifically configured to: complete data channel DC negotiation with the terminal, and send, to the terminal through the DC channel, a first application used to implement a virtual item service; and establish the DC channel with the terminal, to send the media data stream corresponding to the virtual item to the terminal.

In an implementation, the media data stream corresponding to the virtual item includes at least one of the following content: information about a user who gifts the virtual item, a name of the virtual item, blessing information, an animation of the virtual item, a special effect, a red packet, an interaction operation, or a closing operation.

In an implementation, the virtual item call play platform is implemented by a call play platform of the ring back tone service, implemented by a call play platform of the customized ringing tone service, or implemented by a call play platform based on an internet protocol multimedia subsystem IMS voice service.

According to a ninth aspect, a communication apparatus is provided, including a transceiver unit, configured to receive a call request and a response message for a callee ring, where the call request is used to trigger delivery of a virtual item to a terminal, and the terminal is a terminal of a caller user corresponding to the call request or a terminal of a callee user corresponding to the call request. The transceiver unit is further configured to send a query request to a virtual item delivery control service, where the query request is used to query whether to deliver the virtual item to the terminal.

In an implementation, the transceiver unit is further configured to receive a query response from the virtual item delivery control service.

In an implementation, the query response further includes information about a to-be-delivered virtual item.

In an implementation, the transceiver unit is further configured to: request a virtual item media service to query media information of the to-be-delivered virtual item; and receive a response from the virtual item media service, where the response indicates the media information of the to-be-delivered virtual item.

In an implementation, the transceiver unit is further configured to send a play notification to the virtual item media service, where the play notification indicates to play the virtual item for the terminal.

According to a tenth aspect, a communication apparatus is provided, including a transceiver unit, configured to receive a query request from an application server AS of a virtual item service, where the query request is used to query whether to deliver a virtual item to a terminal; and a processing unit, configured to determine, based on a virtual item delivery task, whether to deliver the virtual item to the terminal.

In an implementation, the transceiver unit is further configured to send a query response to the AS of the virtual item service.

In an implementation, the query response further includes information about a to-be-delivered virtual item.

According to an eleventh aspect, a communication apparatus is provided, including a transceiver unit, configured to receive a media query request from an application server AS of a virtual item service, where the media query request includes information about a terminal. The transceiver unit is further configured to send a media data stream corresponding to the to-be-delivered virtual item to the terminal, where the media data stream of the virtual item is determined based on a virtual item delivery task of the terminal.

In an implementation, the transceiver unit is further configured to send a response to the AS of the virtual item service, where the response indicates the media information of the to-be-delivered virtual item.

In an implementation, the transceiver unit is further configured to receive a play notification from the AS of the virtual item service, to indicate to play the to-be-delivered virtual item for the terminal.

In an implementation, the media data stream corresponding to the virtual item includes at least one of the following content: information about a user who gifts the virtual item, a name of the virtual item, blessing information, an animation of the virtual item, a special effect, a red packet, an interaction operation, or a closing operation.

According to a twelfth aspect, a communication apparatus is provided, including a transceiver unit, configured to receive a media data stream corresponding to a virtual item, where the virtual item includes information about a user who gifts the virtual item, and an animation or a special effect of the virtual item; and a processing unit, configured to play media information corresponding to the virtual item in a call process, where the communication apparatus is a terminal of a caller user of the call service or a terminal of a callee user of the call service.

In an implementation, the media data stream corresponding to the virtual item includes at least one of the following content: information about a user who gifts the virtual item, a name of the virtual item, blessing information, an animation of the virtual item, a special effect, a red packet, an interaction operation, or a closing operation.

In an implementation, the processing unit is configured to play the media information corresponding to the virtual item in a call ringing and waiting period and/or a call period in which a call is connected.

In an implementation, the media data stream corresponding to the virtual item includes a media data stream of at least one virtual item, and further includes a media data stream corresponding to a ring back tone service or a customized ringing tone service of the terminal.

In an implementation, the transceiver unit is specifically configured to receive a converged data stream from a virtual item media service, where the converged data stream includes the media data stream of the at least one virtual item, and further includes the media data stream corresponding to the ring back tone service or the customized ringing tone service of the terminal.

In an implementation, the transceiver unit is specifically configured to receive the media data stream corresponding to the virtual item from the virtual item media service through a data channel DC.

In an implementation, the transceiver unit is specifically configured to: complete data channel DC negotiation, and receive, through the DC channel, a first application used to implement a virtual item service; establish the DC channel with the virtual item media service; and after receiving the media data stream corresponding to the virtual item through the DC channel, play the media information corresponding to the virtual item by using the first application.

In an implementation, the processing unit is further configured to: order or subscribe to the virtual item service through a virtual item operation service platform, and set information about a recipient user, to deliver the virtual item to a terminal of the recipient user.

In an implementation, the processing unit is further configured to set, through the virtual item operation service platform, at least one of a quantity of virtual item delivery times, a delivery frequency, a delivery validity period, a delivery priority, and specified play, cyclic play, or random play of a plurality of virtual items.

In an implementation, the virtual item service is implemented by an application server AS of a video ring back tone service, implemented by an AS of a video customized ringing tone service, implemented by an AS based on an internet protocol multimedia subsystem IMS voice service, or implemented by an AS of the virtual item service.

According to a thirteenth aspect, a communication apparatus is provided, including a processor. The processor is coupled to a memory, the memory is configured to store a computer program or instructions, and the processor is configured to execute the computer program or the instructions stored in the memory, so that the apparatus performs the method according to any implementation of the first aspect.

According to a fourteenth aspect, a communication apparatus is provided. The apparatus includes a processor, the processor is coupled to a memory, the memory is configured to store a computer program or instructions, and the processor is configured to execute the computer program or the instructions stored in the memory, so that the apparatus performs the method according to any implementation of the second aspect.

According to a fifteenth aspect, a communication apparatus is provided. The apparatus includes a processor, the processor is coupled to a memory, the memory is configured to store a computer program or instructions, and the processor is configured to execute the computer program or the instructions stored in the memory, so that the apparatus performs the method according to any implementation of the third aspect.

According to a sixteenth aspect, a communication apparatus is provided. The apparatus includes a processor, the processor is coupled to a memory, the memory is configured to store a computer program or instructions, and the processor is configured to execute the computer program or the instructions stored in the memory, so that the apparatus performs the method according to any implementation of the fourth aspect.

According to a seventeenth aspect, a communication apparatus is provided. The apparatus includes a processor, the processor is coupled to a memory, the memory is configured to store a computer program or instructions, and the processor is configured to execute the computer program or the instructions stored in the memory, so that the apparatus performs the method according to any implementation of the fifth aspect.

According to an eighteenth aspect, a communication apparatus is provided. The apparatus includes a processor, the processor is coupled to a memory, the memory is configured to store a computer program or instructions, and the processor is configured to execute the computer program or the instructions stored in the memory, so that the apparatus performs the method according to any implementation of the sixth aspect.

According to a nineteenth aspect, a computer-readable storage medium is provided. The computer-readable storage medium stores computer-executable instructions; and when the computer-executable instructions are invoked by a computer, the computer-executable instructions are used to enable the computer to perform the method according to any implementation of the first aspect.

According to a twentieth aspect, a computer-readable storage medium is provided. The computer-readable storage medium stores computer-executable instructions; and when the computer-executable instructions are invoked by a computer, the computer-executable instructions are used to enable the computer to perform the method according to any implementation of the second aspect.

According to a twenty-first aspect, a computer-readable storage medium is provided. The computer-readable storage medium stores computer-executable instructions; and when the computer-executable instructions are invoked by a computer, the computer-executable instructions are used to enable the computer to perform the method according to any implementation of the third aspect.

According to a twenty-second aspect, a computer-readable storage medium is provided. The computer-readable storage medium stores computer-executable instructions; and when the computer-executable instructions are invoked by a computer, the computer-executable instructions are used to enable the computer to perform the method according to any implementation of the fourth aspect.

According to a twenty-third aspect, a computer-readable storage medium is provided. The computer-readable storage medium stores computer-executable instructions; and when the computer-executable instructions are invoked by a computer, the computer-executable instructions are used to enable the computer to perform the method according to any implementation of the fifth aspect.

According to a twenty-fourth aspect, a computer-readable storage medium is provided. The computer-readable storage medium stores computer-executable instructions; and when the computer-executable instructions are invoked by a computer, the computer-executable instructions are used to enable the computer to perform the method according to any implementation of the sixth aspect.

According to a twenty-fifth aspect, a computer program product including instructions is provided. When the computer program product runs on a computer, the computer is enabled to perform the method according to any implementation of the first aspect.

According to a twenty-sixth aspect, a computer program product including instructions is provided. When the computer program product runs on a computer, the computer is enabled to perform the method according to any implementation of the second aspect.

According to a twenty-seventh aspect, a computer program product including instructions is provided. When the computer program product runs on a computer, the computer is enabled to perform the method according to any implementation of the third aspect.

According to a twenty-eighth aspect, a computer program product including instructions is provided. When the computer program product runs on a computer, the computer is enabled to perform the method according to any implementation of the fourth aspect.

According to a twenty-ninth aspect, a computer program product including instructions is provided. When the computer program product runs on a computer, the computer is enabled to perform the method according to any implementation of the fifth aspect.

According to a thirtieth aspect, a computer program product including instructions is provided. When the computer program product runs on a computer, the computer is enabled to perform the method according to any implementation of the sixth aspect.

According to a thirty-first aspect, a chip is provided. The chip is located in a relay device, the chip includes a processor and a memory coupled to the processor, the memory stores computer program code, and the computer program code includes instructions. When the instructions are executed by the processor, the relay device is enabled to perform the method according to any implementation of the first aspect.

According to a thirty-second aspect, a chip is provided. The chip is located in a relay device, the chip includes a processor and a memory coupled to the processor, the memory stores computer program code, and the computer program code includes instructions. When the instructions are executed by the processor, the relay device is enabled to perform the method according to any implementation of the second aspect.

According to a thirty-third aspect, a chip is provided. The chip is located in a relay device, the chip includes a processor and a memory coupled to the processor, the memory stores computer program code, and the computer program code includes instructions. When the instructions are executed by the processor, the relay device is enabled to perform the method according to any implementation of the third aspect.

According to a thirty-fourth aspect, a chip is provided. The chip is located in a relay device, the chip includes a processor and a memory coupled to the processor, the memory stores computer program code, and the computer program code includes instructions. When the instructions are executed by the processor, the relay device is enabled to perform the method according to any implementation of the fourth aspect.

According to a thirty-fifth aspect, a chip is provided. The chip is located in a relay device, the chip includes a processor and a memory coupled to the processor, the memory stores computer program code, and the computer program code includes instructions. When the instructions are executed by the processor, the relay device is enabled to perform the method according to any implementation of the fifth aspect.

According to a thirty-sixth aspect, a chip is provided. The chip is located in a relay device, the chip includes a processor and a memory coupled to the processor, the memory stores computer program code, and the computer program code includes instructions. When the instructions are executed by the processor, the relay device is enabled to perform the method according to any implementation of the sixth aspect.

According to a thirty-seventh aspect, a communication system is provided. The communication system includes the communication apparatus according to any implementation of the seventh aspect, the communication apparatus according to any implementation of the eighth aspect, and the communication apparatus according to any implementation of the twelfth aspect.

In an implementation, the communication apparatus according to any implementation of the eighth aspect may be implemented by using the communication apparatus according to any implementation of the ninth aspect, the communication apparatus according to any implementation of the tenth aspect, and the communication apparatus according to any implementation of the eleventh aspect.

It may be understood that any apparatus, computer-readable storage medium, computer program product, chip, communication system, and the like provided in the seventh aspect to the thirty-seventh aspect may be implemented by using the corresponding method provided above. Therefore, for beneficial effects that can be achieved, refer to beneficial effects in the corresponding method provided above. Details are not described herein again.

### BRIEF DESCRIPTION OF DRAWINGS

FIG. 1 is a diagram of a virtual item gifting service according to an embodiment of this application;
FIG. 2 is a diagram of an architecture of a communication system according to an embodiment of this application;
FIG. 3 is a diagram of a structure of an electronic device according to an embodiment of this application;
FIG. 4 is a block diagram of a software structure of a terminal device according to an embodiment of this application;
FIG. 5A is a schematic flowchart of virtual item purchasing, gifting, and delivery according to an embodiment of this application;
FIG. 5B is a diagram of a virtual item delivery scenario according to an embodiment of this application;
FIG. 6 is a schematic flowchart of a call process implementation method according to an embodiment of this application;
FIG. 7 to FIG. 11 are schematic flowcharts 1 to 5 of a call process implementation method according to an embodiment of this application; and
FIG. 12 is a diagram of a structure of a communication apparatus according to an embodiment of this application.

### DESCRIPTION OF EMBODIMENTS

The following terms "first" and "second" are merely used for description, but should not be understood as indicating or implying relative importance or implying a quantity of indicated technical features. Therefore, a feature limited by "first" or "second" may explicitly or implicitly include one or more features. In descriptions of the embodiments, unless otherwise stated, "a plurality of" means two or more.

It should be noted that, in this application, words such as "example" or "for example" are used to represent giving examples, illustrations, or descriptions. Any embodiment or design solution described as "example" or "for example" in this application should not be construed as being more preferred or advantageous than other embodiments or design solutions. Specifically, the words such as "example" or "for example" are used to present related concepts in a specific manner.

The following clearly and completely describes the technical solutions in embodiments of this application with reference to the accompanying drawings in embodiments of this application. It is clear that the described embodiments are merely some rather than all of embodiments of this application. Based on embodiments of this application, all other embodiments obtained by a person of ordinary skill in the art without creative efforts fall within the protection scope of this application.

An implementation environment and an application scenario of embodiments of this application are briefly described first.

This application may be applied to a universal network architecture that provides a multimedia service based on the internet protocol (Internet Protocol, IP), that is, a multimedia subsystem (IP Multimedia Subsystem, IMS). As a communication operator, an IMS network can provide a multimedia service form, and can meet new and diversified multimedia service requirements of end users.

In embodiments of this application, virtual item gifting and delivery services are added in a call process. For example, in a ringing and waiting period of a call made by a user or a call period after a call is connected, a virtual item is displayed and played for the user on a screen of a terminal, so that visual and auditory experience of the user can be enriched, and the call process, especially the ringing and waiting period, becomes more vivid and interesting, thereby improving enjoyment of the call process, enriching user experience, and meeting diversified requirements of network users. In addition, the virtual item gifting service may also be used as a convenient social manner for users to express emotions or transfer blessings, thereby enriching communication manners of the users.

In embodiments of this application, the virtual item, or referred to as an electronic gift, an electronic present, a virtual present, a virtual gift, or the like, means a manner in which a user expresses a blessing, gives a gift, or transfers information to another user in a network in at least one media form such as a text, a picture, an animation, a special effect, audio, or a video.

An implementation process of a virtual item in a call process may include procedures such as purchasing, gifting, delivery, or acceptance. The following briefly describes implementation scenarios of the virtual item.

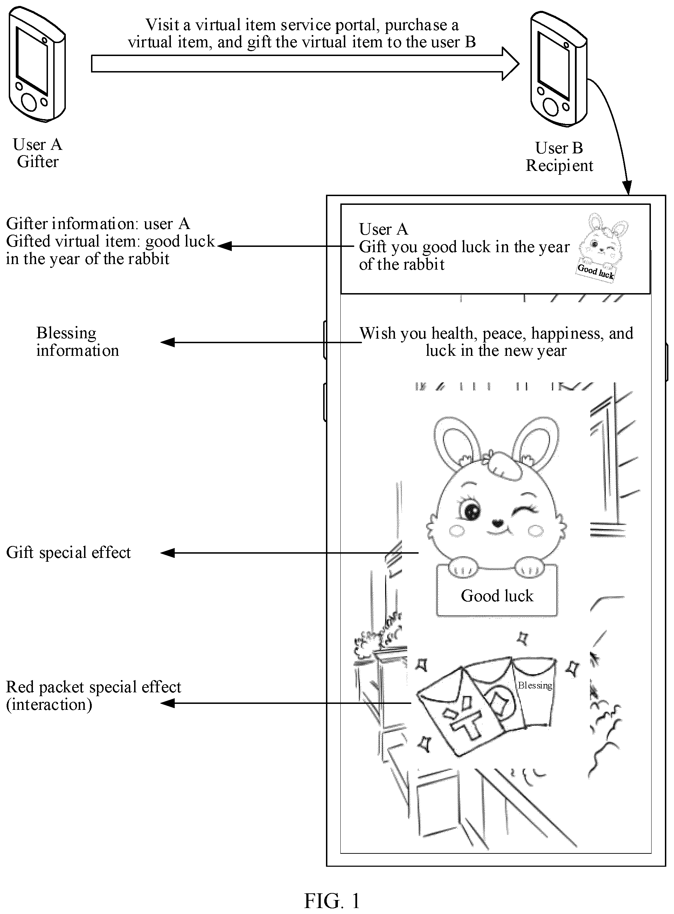

As shown in FIG. 1, a user A (a gifter) visits a virtual item service portal, and may purchase a virtual item. Then, the user A may gift the purchased virtual item to another user. For example, the user A gifts a virtual item 1 to a user B (a recipient), and sets a corresponding blessing, red packet, or the like for the virtual item 1.

Then, a network may deliver the virtual item to a terminal of the recipient, that is, the user B may play, on the terminal in a call process, the virtual item 1 gifted by the user A. A process of delivering the virtual item by the network to the terminal may include a process in which the network sends a media data stream corresponding to the virtual item to the terminal and the terminal receives and plays the media data stream.

For example, in a process in which the user B makes a call, in a ringing and waiting period, the terminal of the user B receives the media data stream of the virtual item, and may play, on a display of the terminal, the virtual item 1 gifted by the user A, as shown in FIG. 1. Optionally, the terminal may further play, through a speaker or a headset, a sound effect corresponding to the virtual item.

In an implementation, the terminal to which the virtual item is delivered is not limited to a terminal of a caller user or a terminal of a callee user in a call process. That is, virtual item delivery may include the following two scenarios.

Scenario 1: When a recipient of a virtual item serves as a caller user of a call service (for example, the user B calls another user), a network may deliver the virtual item to a terminal of the user.

Scenario 2: When a recipient of a virtual item serves as a callee user of a call service (for example, another user calls the user B), a network may also deliver the virtual item to a terminal of the user.

It should be noted that the foregoing two scenarios may coexist in a same call process. In other words, in a scenario in which both the caller user and the callee user are gift recipients, the network may respectively deliver corresponding virtual items to the terminal of the caller user and the terminal of the callee user at the same time. For example, if the user B is a recipient of a virtual item 1, the user B calls a user N, and the user N is a recipient of a virtual item 2, the network may respectively deliver corresponding virtual items to a terminal of the user B and a terminal of the user N in a call ringing and waiting period, that is, the terminal of the user B plays the virtual item 1, and the terminal of the user N plays the virtual item 2.

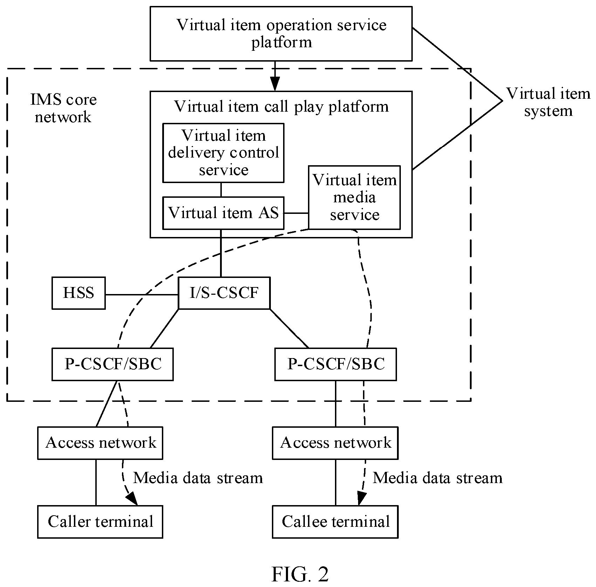

In addition, this application may be applied to a communication system shown in FIG. 2, and is mainly applied to an implementation scenario in which a caller user calls a callee user by using a call service of a terminal. For ease of description, in embodiments of this application, a terminal of a caller user may be referred to as a caller terminal, and a terminal of a callee user may be referred to as a callee terminal.

As shown in FIG. 2, the communication system may include a caller terminal, a callee terminal, an access network, an IMS core network, and a virtual item operation service platform.

The caller terminal is configured to initiate a call service to the callee terminal through a network. The callee terminal is configured to receive the call service from the caller terminal. The caller terminal and the callee terminal are configured to jointly implement a call service after a call is connected, and implement a virtual item delivery service in a call process.

The terminal is a device, an apparatus, or a machine that has a computing processing capability. In embodiments of this application, the terminal may be a device that has a call function, an intelligent terminal, an internet of things terminal device, or the like. The terminal may also be referred to as user equipment (user equipment, UE), a mobile station, a mobile terminal, a terminal device, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, a smart home, smart office, smart wearable, smart transportation, and a smart city. The terminal may be a mobile phone, a tablet computer, a computer with wireless sending and receiving functions, a wearable device, a vehicle-mounted terminal, a robot, a mechanical arm, a smart home device, or the like. Neither of a specific technology and a specific device form used for the terminal is limited in embodiments of this application.

The access network is configured to enable a terminal to access a network and perform wireless communication, and may include a base station (Base Station, BS). There may be a plurality of forms of base stations, such as a macro base station, a micro base station, or an access point. For example, the base station in embodiments of this application may be a base station in 5th generation (The fifth generation, 5G) mobile communication, a base station in long term evolution (Long Term Evolution, LTE), a base station in a 6th generation mobile communication network, or the like. The base station in 5G may also be referred to as a transmission reception point (Transmission Reception Point, TRP) or a next generation NodeB (the next generation NodeB, gNB).

The IMS core network is configured to implement a plurality of media service forms provided by a communication operator, such as an audio or video ring back tone service, an audio or video customized ringing tone service, or a virtual item service, and is configured to effectively manage network resources, user resources, and application resources, to improve network intelligence, so that a user can cross various networks and use a plurality of terminals to achieve converged communication experience.

In embodiments of this application, for ease of description, the audio ring back tone service or the video ring back tone service is referred to as a ring back tone service for short, and the audio customized ringing tone service or the video customized ringing tone service is referred to as a customized ringing tone service for short. This is not described again below.

The virtual item operation service platform is configured to implement a service operation service function for a virtual item, provide virtual item purchasing and gifting services for a user through a web portal (Web Portal), an application (Application, APP), or the like, and assign a delivery task of a virtual item purchased and gifted by the user to a call play platform. The call play platform delivers the virtual item to a terminal of a gift recipient when the recipient performs a call service subsequently. In addition, the virtual item operation service platform is further configured to provide, through a web portal (Web Portal), an application (Application, APP), or the like, a user with a setting service related to virtual item gifting, reception, play, or the like.

The IMS core network may include the call play platform and a call session control function (Call Session Control Function, CSCF), and optionally may further include a home subscriber server (Home Subscriber Server, HSS), a session border controller (Session Border Controller, SBC), and the like.

The call play platform is configured to implement services of various operation service platforms associated with a call service in a call process, and for example, may include a ring back tone call play platform for implementing a ring back tone service, a customized ringing tone call play platform for implementing a customized ringing tone service, a virtual item call play platform for implementing a virtual item service, and a voice over long term evolution (Voice over Long Term Evolution, VoLTE) call play platform for implementing an audio/video call service.

In an implementation, the call play platform may be implemented by using an application server (Application Server, AS), a media service, and a delivery control service.

The application server (Application Server, AS) is a device at an application layer in the IMS system. The IMS system may generally include a plurality of ASs, to provide services such as a basic service, a supplementary service, a multimedia conference, and rich communication. Generally, a service provided by an AS may be referred to as an AS service. For example, the IMS system includes a multimedia telephony (Multimedia Telephony, MMTel) AS, a VoLTE AS, a ring back tone AS, and a customized ringing tone AS.

An AS network element and a CSCF network element may interact with each other by using the session initiation protocol (Session initialization Protocol, SIP), to trigger and perform various network services.

In an IMS network, the CSCF network element is mainly responsible for processing signaling control in a multimedia call session process, for example, managing user authentication in the IMS network, controlling a SIP session in cooperation with another network entity, and performing service negotiation and resource allocation. Each AS network element and each CSCF network element may interact with each other by using SIP, to trigger and perform various network services.

According to different responsible functions, CSCF network elements may be classified into: a proxy CSCF (Proxy CSCF, P-CSCF) network element, an interrogating CSCF (Interrogating CSCF, I-CSCF) network element, a serving CSCF (Serving CSCF, S-CSCF) network element, an emergency CSCF (Emergency CSCF, E-CSCF) network element, and the like.

The S-CSCF is a central node of the IMS core network, and is mainly used for subscriber registration, authentication control, session routing, service triggering control, and session status information maintenance. The I-CSCF is a unified preliminary ingress point of the IMS network, and is responsible for assigning and querying an S-CSCF for subscriber registration. The P-CSCF is a session processing proxy network element of the IMS core network. Session messages initiated by all IMS terminals and session messages terminated at the IMS terminals need to pass through the network element.

A virtual item service is used as an example. As shown in FIG. 2, the virtual item call play platform may include a virtual item AS, a virtual item media service, and a virtual item delivery control service.

Virtual item AS: is an access network element of call signaling related to a virtual item, supports to trigger media negotiation with a terminal side based on a virtual item delivery task of a user, and after the media negotiation succeeds, indicates the virtual item media service to display or play the virtual item for a terminal.

Virtual item media service: is configured to convert and encapsulate media content corresponding to the virtual item into a media data stream after the media negotiation corresponding to the virtual item is completed, and deliver the media data stream to the terminal through a network, so that the terminal can display or play the virtual item.

Virtual item delivery control service: controls or decides, based on a virtual item delivery service (for example, including subscription information) assigned by the virtual item operation service platform, whether to deliver a virtual item for the user and specifically delivered virtual item content in a ringing and waiting state of a call.

It should be noted that, in the foregoing network architecture, network elements such as the virtual item AS, the virtual item media service, and the virtual item delivery control service are all logical network elements, and may be independently deployed on different physical network elements, or a plurality of logical network elements may be deployed on a same physical network element. In actual implementation, the logical network element may be an independent network element, or may be implemented by an existing network element in an existing network through function extension. For example, a logical function of the virtual item AS may be actually carried by a network element such as a ring back tone AS, a customized ringing tone AS, or a voice over long term evolution (Voice over Long Term Evolution, VoLTE) AS. For another example, for the virtual item media service, a logical function corresponding to the virtual item media service may be implemented by a network element such as a ring back tone media service or a customized ringing tone media service. This is not specifically limited in this application, and a subsequent specific implementation is merely used as a possible example.

In addition, as shown in FIG. 2, the IMS core network may further include: an HSS, which is a user database system configured to store user subscription information and location information; and an SBC, configured to provide secure access and media and data processing in a call.

Based on the foregoing scenario, this application provides a call process implementation method and an apparatus, which may be applied to the communication system shown in FIG. 2. It may be understood that the communication system shown in FIG. 2 is merely used as an example, and is not intended to limit the technical solutions of this application. A person skilled in the art should understand that in a specific implementation process, the communication system may include fewer network elements than those shown in FIG. 2, or may include a network element other than those shown in FIG. 2, or a quantity of network elements shown in FIG. 2 may be determined based on a specific requirement. This is not limited in this application.

Optionally, each network element in FIG. 2 in embodiments of this application may be a general-purpose network element or a dedicated network element. This is not specifically limited in embodiments of this application.

Optionally, a related function of each network element in FIG. 2 in embodiments of this application may be implemented by one device, or may be jointly implemented by a plurality of devices, or may be implemented by one or more functional modules in one device. This is not specifically limited in embodiments of this application. It may be understood that the foregoing function may be an element in a hardware device, or may be a software function running on dedicated hardware, a combination of hardware and software, or a virtualization function instantiated on a platform (for example, a cloud platform).

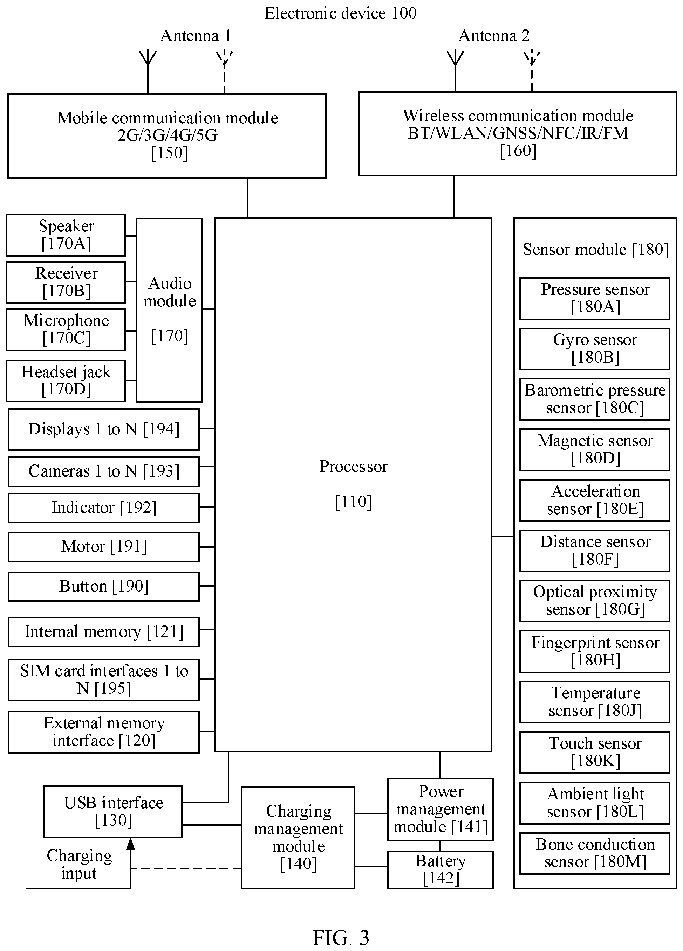

In addition, the caller terminal or the callee terminal in FIG. 2 may be shown in FIG. 3. FIG. 3 is a diagram of a structure of an electronic device. In some other embodiments of this application, the terminal may include more or fewer components than those shown in FIG. 3, or combine some components, or split some components, or have different component arrangements. The components shown in the figure may be implemented by hardware, software, or a combination of software and hardware.

The terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the terminal device. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the terminal device.

The I2S interface may be used for audio communication. In some embodiments, the processor 110 may include a plurality of groups of 12S buses. The processor 110 may be coupled to the audio module 170 by using the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may be configured to perform audio communication, and sample, quantize, and code analog signals. In some embodiments, the audio module 170 may be coupled to the wireless communication module 160 by using a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the terminal device. The processor 110 communicates with the display 194 by using the DSI interface, to implement a display function of the terminal device.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the terminal device, or may be configured to transmit data between the terminal device and a peripheral device, or may be configured to connect to a headset to play audio by using the headset. The interface may alternatively be configured to connect to another electronic device, such as an AR device.

It may be understood that the interface connection relationship between the modules shown in this embodiment of this application is merely an example, and does not constitute a limitation on the structure of the terminal device. In other embodiments of this application, the terminal device may alternatively use an interface connection manner that is different from the manner in the foregoing embodiment, or a combination of a plurality of interface connection manners.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the terminal device. When charging the battery 142, the charging management module 140 may further supply power to the electronic device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The mobile communication module 150 may provide a solution that is applied to the terminal device and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the terminal device and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), infrared (infrared, IR), and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the terminal device, the antenna 1 is coupled to the mobile communication module 150, and the antenna 2 is coupled to the wireless communication module 160, so that the terminal device can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device may implement a display function by using the GPU, the display 194, an application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the terminal device may include one or N displays 194, where N is a positive integer greater than 1.

The terminal device may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the terminal device may include one or N cameras 193, where N is a positive integer greater than 1.

The digital signal processor is configured to process a digital signal. In addition to processing a digital image signal, the digital signal processor may further process another digital signal. For example, when the terminal device selects a frequency, the digital signal processor is configured to perform Fourier transform or the like on frequency energy.

The video codec is configured to compress or decompress a digital video. The terminal device may support one or more types of video codecs. In this way, the terminal device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the terminal device, for example, image recognition, facial recognition, voice recognition, and text understanding.

The external memory interface 120 may be configured to connect to an external memory card, such as a micro SD card, to extend a storage capability of the terminal device. The external memory card communicates with the processor 110 through the external memory interface 120, to implement a data storage function. For example, files such as music or videos are stored in the external memory card.

The internal memory 121 may be configured to store computer executable program code, where the executable program code includes instructions. The processor 110 performs various function applications and data processing of the terminal device by running the instructions stored in the internal memory 121. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the terminal device. In addition, the internal memory 121 may include a high-speed random access memory, and may further include a non-volatile memory, such as at least one magnetic disk storage component, a flash memory component, and a universal flash storage (universal flash storage, UFS).

The terminal device may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The terminal device may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the terminal device, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the terminal device. In some other embodiments, two microphones 170C may be disposed on the terminal device. In addition to sound signal collection, a noise reduction function may be further implemented. In some other embodiments, three, four, or more microphones 170C may be alternatively disposed on the terminal device, to collect a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The SIM card interface 195 is configured to connect to a SIM card. The SIM card may be inserted into the SIM card interface 195 or pulled out of the SIM card interface 195, to implement contact with or separation from the terminal device. The terminal device may support one or N SIM card interfaces, and N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The terminal device interacts with a network by using a SIM card, to implement functions such as conversation and data communication. In some embodiments, the terminal device uses an eSIM, namely, an embedded SIM card. The eSIM card may be embedded in the terminal device, and cannot be separated from the terminal device.

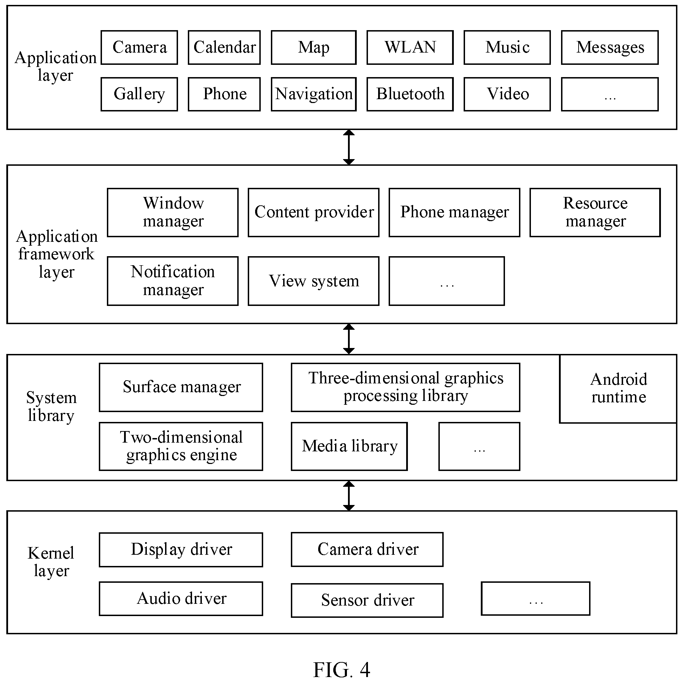

FIG. 4 is a block diagram of a software structure of a terminal device according to an embodiment of this application.

A software system of the terminal device may use a layered architecture, an event-driven architecture, a microkernel architecture, a micro service architecture, or a cloud architecture. In embodiments of this application, an Android system with a layered architecture is used as an example to describe the software structure of the terminal device.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Phone, Map, Navigation, WLAN, Bluetooth, Music, Video, and Messages.

In an implementation, the application packages may include an application such as data backup, data recovery, or "mobile phone clone", to implement backup and recovery of user data. This is described with reference to a specific embodiment subsequently, and details are not described herein.

In another implementation, an operating system of the terminal device may further include a backup system, to implement data backup and data recovery. This is described with reference to a specific embodiment subsequently, and details are not described herein.

The application framework layer provides an application programming interface (application programming interface, API) and a programming framework for applications at the application layer. The application framework layer includes some predefined functions.

As shown in FIG. 4, the application framework layer may include a window manager, a content provider, a view system, a phone manager, a resource manager, a notification manager, and the like.

The window manager is configured to manage window programs. The window manager may obtain a display size, determine whether there is a status bar, lock a screen, take a screenshot, and the like.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The phone manager is configured to provide a communication function for the terminal device, for example, call status management (including accepting and declining).

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, an alert tone is made, the electronic device vibrates, or an indicator blinks.

The Android runtime includes a core library and a virtual machine. The Android runtime is responsible for scheduling and management of the Android system.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library can support a plurality of audio and video coding formats, such as MPEG-4, H.264, MP3, MP4, SVGA, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

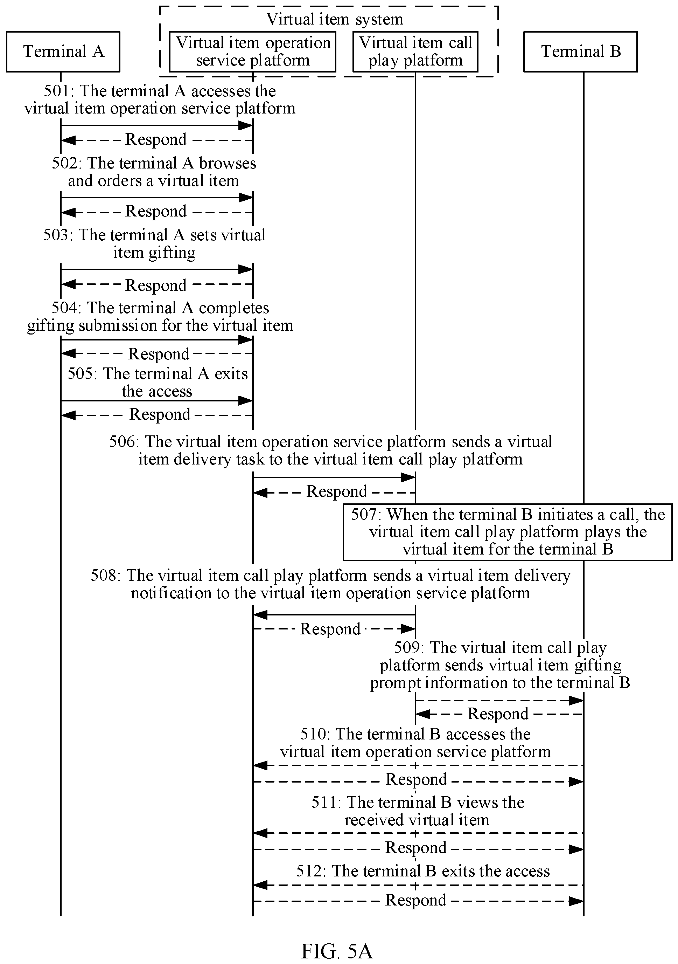

Next, with reference to the foregoing content and the accompanying drawings, a basic service procedure of purchasing, gifting, and delivering a virtual item is briefly described. As shown in FIG. 5A, the following steps may be included.

501: A terminal A accesses a virtual item operation service platform.

The terminal A may access the virtual item operation service platform by using a web portal, an application, an applet, or the like. For example, the terminal A may access the virtual item operation service platform by tapping to start an "electronic gift mall" app, or opening a website of "xx operator service platform".

In an implementation, the terminal A may log in to the virtual item operation service platform based on a user account (for example, a phone number) and perform access.

Optionally, after the terminal A successfully logs in to the virtual item operation service platform, the virtual item operation service platform may send a response message to the terminal A.

502: The terminal A browses and orders a virtual item.

The terminal A may browse virtual items on the virtual item operation service platform by using a web portal, an application, an applet, or the like, and select one of the virtual items for subscription or purchasing.

503: The terminal A sets virtual item gifting.

For example, if a user wants to gift the purchased virtual item to a user B, the user may enter a phone number of the user B in a virtual item gifting setting to implement a virtual item gifting process.

In an implementation, the setting of the virtual item may further include setting a nickname of a recipient (for example, the user B), blessing information, a delivery date or time period of the virtual item, a quantity of delivery times, and recipient information (for example, a phone number and a name), adding a red packet or an attached gift, and the like.

In an implementation, the setting of the virtual item may further include setting delivery priorities of a plurality of virtual items, and performing specified play, cyclic play, random play, or the like on the plurality of virtual items.

504: The terminal A completes gifting submission for the virtual item.

For example, after setting the virtual item gifting, the terminal A may implement gifting submission for the virtual item by tapping a "submit" or "complete" button.

The foregoing operation may trigger the virtual item operation service platform to generate a corresponding virtual item delivery task.

505: The terminal A exits the access.

For example, the user logs out a login account on the virtual item operation service platform, or closes a web portal, an application, an applet, or the like corresponding to the virtual item operation service platform.

506: The virtual item operation service platform sends the virtual item delivery task to a virtual item call play platform.

The virtual item operation service platform may generate the virtual item delivery task based on the foregoing operations of subscribing to or purchasing and gifting the virtual item, and send the virtual item delivery task to the virtual item call play platform.

Optionally, the virtual item delivery task generated by the virtual item operation service platform may include information such as the delivery date or time period of the virtual item, and the quantity of delivery times.

507: When a terminal B initiates a call, the virtual item call play platform plays the virtual item for the terminal B.

In an implementation, the recipient of the virtual item is the terminal B of the user B. When a call service occurs within the set delivery date or time period of the virtual item, the virtual item call play platform may trigger delivery of the virtual item to the terminal B.

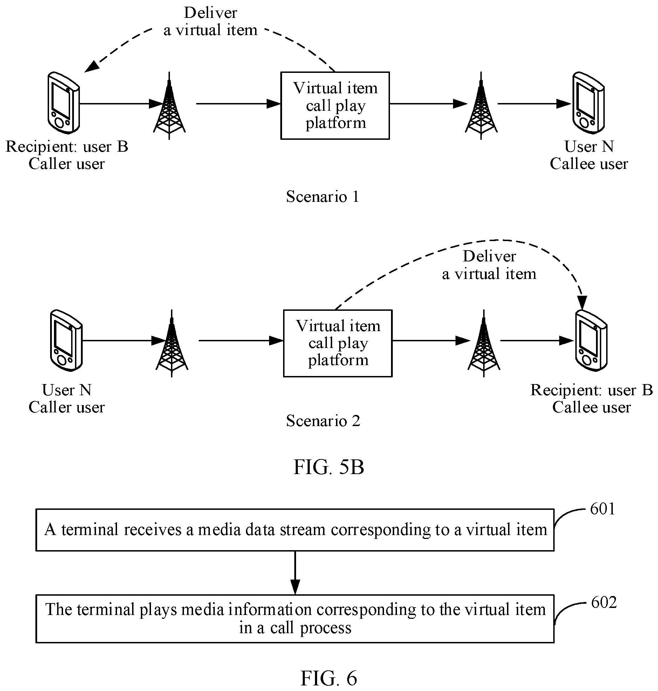

As shown in FIG. 5B, delivery of the virtual item may specifically include the following scenarios.

Scenario 1: The terminal B initiates a call service, and the virtual item call play platform delivers the virtual item to the terminal B. For example, when the terminal B calls another user, a display plays the virtual item in a ringing and waiting period.

Scenario 2: The terminal B receives a call service, and the virtual item call play platform delivers the virtual item to the terminal B. For example, when another user calls the terminal B, a display plays the virtual item in an answer waiting period of the terminal B.

In an implementation, if the user B also subscribes to another media service associated with the call service, such as a ring back tone service or a customized ringing tone service, a plurality of media files may be displayed in an overlay mode according to a user setting, for example, a ring back tone and the virtual item are displayed or played together in an overlay mode, or a customized ringing tone and the virtual item are displayed or played together in an overlay mode; or selective play or cyclic play may be performed based on a service priority that is set by the user. The following describes an implementation process with reference to a specific example, and details are not described herein again.

508: The virtual item call play platform sends a virtual item delivery notification to the virtual item operation service platform.

After completing the virtual item delivery task for the user B, the virtual item call play platform may send the delivery notification to notify the virtual item operation service platform that delivery of the virtual item is completed.

In addition, in an implementation, if the user performs a related interaction operation in a process of playing the virtual item, for example, pressing a button for appreciation, closing display of the virtual item, or no longer displaying the virtual item, the virtual item call play platform may report interaction information of the user to the virtual item operation service platform by including the interaction information in the delivery notification, and the virtual item operation service platform may perform corresponding service processing based on the specific interaction operation. For example, if the interaction information carried in the delivery notification is button-press appreciation information, the virtual item operation service platform may display and notify replied appreciation information of the recipient user to a gifter (for example, a terminal of a user A). For another example, if the interaction information carried in the delivery notification is an operation of no longer displaying the virtual item subsequently, the virtual item operation service platform may update the virtual item delivery task for the user based on the interaction information.

In the foregoing implementation, the virtual item service is added in a call process of the user through a process in which the gifter purchases the virtual item and then performs gifting setting and a network delivers the virtual item to the recipient, thereby improving enjoyment and improving user experience.

In an implementation, in consideration of promotion of the virtual item service and improvement of service usage, the following process may be further used to enable the recipient user to know or use the virtual item service. Further, the method may further include the following steps.

509: The virtual item call play platform sends virtual item gifting prompt information to the terminal B.

After completing the electronic gift delivery task for the terminal B, the virtual item call play platform may send the virtual item gifting prompt information to the terminal B, for example, may send the prompt information by using a notification, an SMS message, an official account push message, or the like. Optionally, the prompt information may carry an operation service access entry of the virtual item, for example, name or address information of a web portal, an application, an official account, or an applet, so that the user B may access the virtual item operation service platform through the entry.

510: The terminal B accesses the virtual item operation service platform.

This is as described in the foregoing step 501.

511: The terminal B views the received virtual item.

The user can view related information of the virtual item received by the user on the virtual item operation service platform and set virtual item play, for example, a setting of play duration or a play sequence priority, or a setting of closing virtual item play. Optionally, a setting of not accepting or returning the virtual item may be further included.

As described in the foregoing step 502, the terminal B may further browse and order a virtual item.

In an implementation, optionally, if the virtual item received by the user further carries an attached item such as an electronic consumption coupon or a red packet, the user may tap to claim and use the attached item. For example, the virtual item carries an electronic consumption coupon, which may be used to order an electronic gift. In this case, the user may browse virtual items on the virtual item operation service platform by using a web portal, an application, an applet, or the like, select one of the virtual items, and subscribe to or purchase the virtual item by using the electronic consumption coupon. For another example, if the virtual item carries a red packet, the user may tap to claim the red packet, and may further withdraw the amount of the claimed red packet on the virtual item operation service platform, for example, withdraw the amount to a specified bank card.

512: The terminal B exits the access.

This is as described in the foregoing step 505.

In the foregoing possible implementation, notification information of gifting the virtual item is sent to the recipient, so that the virtual item service can be promoted, service usage can be improved, and user experience can be improved.

It should be noted that, in this embodiment of this application, the foregoing basic service procedure of purchasing and gifting the virtual item is not specifically limited. For details, refer to an implementation of a related service. In addition, optionally, each step in the foregoing embodiment may further include a corresponding response message, to indicate whether the foregoing operation or message is successfully responded to.

The following describes a virtual item delivery procedure with reference to corresponding accompanying drawings, including an interaction procedure between a core network and a terminal.

This application provides a call process implementation method, applied to a terminal side. As shown in FIG. 6, the method may include the following steps.

601: A terminal receives a media data stream corresponding to a virtual item.

The terminal is a recipient of the virtual item. That is, when a user gifts the virtual item to a user of the terminal, the terminal of the recipient may receive the media data stream corresponding to the gifted virtual item. For example, as shown in FIG. 1, a virtual item gifted by the user A to the user B is a special effect of "good luck in the year of the rabbit" in a new year blessing, and gifter information and blessing information are set. In this case, a network may generate a media data stream corresponding to the virtual item, where the media data stream may include video data of an animation special effect, and data including the gifter information and the blessing information, and optionally may further include audio data, and the media data stream is sent to the terminal.

The terminal may be a caller terminal or a callee terminal of a call service, that is, the terminal may be a terminal of a caller user of the call service described in step 602, or may be a terminal of a callee user of the call service.

In an implementation, the terminal receives, in a call process, the media data stream corresponding to the virtual item, that is, the terminal may receive, in real time from a network device each time a call service occurs, a media data stream corresponding to a to-be-delivered virtual item.

Alternatively, in another implementation, the terminal may receive the media data stream corresponding to the virtual item before the call. That is, before the call service occurs, the terminal may receive the media data stream corresponding to the virtual item in advance and store the media data stream locally, and subsequently may play media information corresponding to the virtual item when the call service occurs.

602: The terminal plays media information corresponding to the virtual item in a call process.

The call process includes any time period from triggering of a start of the call service to an end of the call service.

In an implementation, the terminal may play the media information corresponding to the virtual item in a call ringing and waiting period, or the terminal may play the media information corresponding to the virtual item in a call period in which a call is connected, or the terminal may play the media information corresponding to the virtual item in both a call ringing and waiting period and a call period in which a call is connected.

Optionally, a manner of playing the virtual item may be specifically one-time play or cyclic play. For example, a setting may be that a same virtual item is cyclically played in a call ringing and waiting period, or a plurality of virtual items are cyclically played in a call ringing and waiting period, or a virtual item is played once in a call period in which a call is connected. The terminal may perform local setting, or a gifter completes initial setting when ordering and gifting the virtual item, or the network presets an initial play manner, and subsequently the user may set a play manner by using the terminal according to a preference.

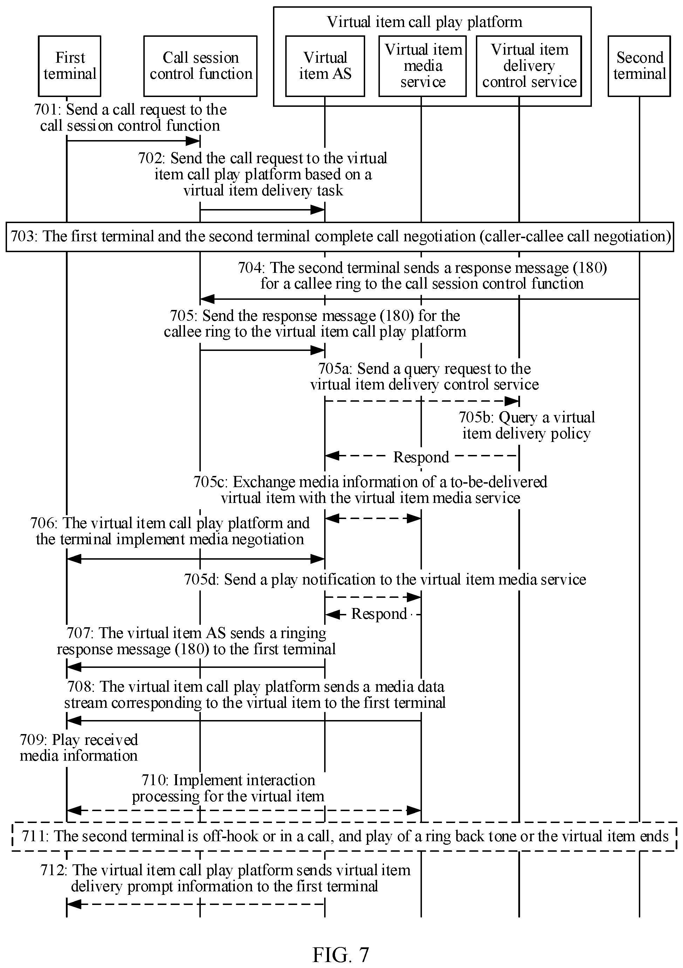

In addition, with reference to an interaction procedure between a core network and a terminal, this application further provides a call process implementation method. As shown in FIG. 7, the method may include the following steps.

701: A first terminal sends a call request to a call session control function.

The call request is a request message of a call service. The call service relates to at least two terminals, that is, a caller terminal that initiates the call request, and a receiving terminal, that is, a callee terminal, corresponding to the call request. The first terminal is a caller terminal, and a second terminal may be a callee terminal.

In an implementation, in the communication system shown in FIG. 2, the call session control function may be a CSCF network element.

702: The call session control function sends the call request to a virtual item call play platform based on a virtual item delivery task]

As described in the foregoing content, after a terminal performs ordering and gifting setting on a virtual item, a virtual item operation service platform may be triggered to generate a corresponding virtual item delivery task. In other words, the virtual item operation service platform may generate a virtual item delivery task for a user, and the call session control function may obtain the virtual item delivery task, so as to deliver a virtual item to a terminal of the user when it is determined that a call service of the user meets a delivery condition. In addition, the virtual item operation service platform may further send the virtual item delivery task to the virtual item call play platform.

In an implementation, the call session control function receives the call request from the first terminal, and may determine, based on the virtual item delivery task, that at least one of a caller user or a callee user included in the current call request is a recipient of the virtual item. In this case, the call session control function may send the call request to the virtual item call play platform, to trigger delivery of the virtual item to the caller user or the callee user (for example, the first terminal or the second terminal).

In an implementation, the virtual item call play platform may be implemented by using three logical network elements: a virtual item AS, a virtual item media service, and a virtual item delivery control service. For example, step 702 may be specifically: The call session control function may send the call request to the virtual item AS.

703: The first terminal completes call negotiation with the second terminal.

For a specific interaction process, refer to a caller-callee call negotiation procedure related to a call service, and details are not described herein.

704: The second terminal sends a response message for a callee ring to the call session control function.

After caller-callee call negotiation of the call service succeeds, the callee terminal may send a response message, for example, a 180 message, indicating that the callee terminal rings to the call session control function.

705: The call session control function sends the response message for the callee ring to the virtual item call play platform.

As described above, the call session control function may send a response message, for example, a 180 message, indicating that the callee terminal rings to the virtual item call play platform.

706: The virtual item call play platform implements media negotiation with a terminal.

The terminal is a recipient of the virtual item, and may be the first terminal, that is, the caller terminal, or may be the second terminal, that is, the callee terminal in this embodiment of this application.

In the following embodiments of this application, only an example in which a virtual item is delivered to a caller terminal (that is, the first terminal) is used. This does not constitute a limitation on an implementation of this application. Similarly, when the method in this application is applied to an implementation scenario in which a virtual item is delivered to a callee terminal, subsequent steps of delivering a virtual item to a terminal in this embodiment may be processed based on the second terminal or interact with the second terminal. Details are not described herein.

In an implementation, the virtual item call play platform may be implemented by using three logical network elements: a virtual item AS, a virtual item media service, and a virtual item delivery control service. For example, step 705 may be specifically: The call session control function may send the response message for the callee ring to the virtual item AS.

Step 706 may specifically include: The virtual item AS initiates media negotiation with the first terminal, and the first terminal sends a media negotiation response message, for example, a 200 message, to the virtual item AS.

Optionally, the virtual item call play platform may further include the following internal interaction steps.

705a: The virtual item AS sends a query request to the virtual item delivery control service.

The virtual item AS requests the virtual item delivery control service to query the virtual item delivery task of the first terminal. In an implementation, the query request may carry an identification code of the first terminal.

705b: The virtual item delivery control service queries a virtual item delivery policy.

The virtual item delivery control service authenticates and determines, based on the virtual item delivery task of the first terminal, a policy of delivering a virtual item to the first terminal this time, and feeds back the policy to the virtual item AS. The delivery policy determined by the virtual item delivery control service may specifically include: whether to deliver the virtual item this time, delivered virtual item content, delivery time, other information, and the like.

In an implementation, a specific basis for the virtual item delivery control service to determine the virtual item delivery policy may include the following conditions:
(1) Whether the virtual item can be delivered this time is determined based on a validity period, a quantity of delivery times, a delivery frequency, or the like of virtual item delivery that is default/set by the user terminal.
(2) Whether the virtual item can be delivered this time is determined based on a service attribute of the user terminal. For example, the user is allowed to reject virtual item delivery by using a personalized do-not-disturb setting of the user. In this scenario, the virtual item may not be delivered.
(3) If the user has a plurality of virtual item tasks to be delivered, the user can make a decision based on priorities of virtual items or priorities of gifter users. Further, optionally, for a plurality of delivery tasks with a same priority, a decision may be made by using a method such as rotation or randomization.

705c: The virtual item AS exchanges media information of a to-be-delivered virtual item with the virtual item media service.

The virtual item AS determines the to-be-delivered virtual item, and requests the virtual item media service to obtain the media information corresponding to the virtual item.

705d: The virtual item AS sends a play notification to the virtual item media service.

After step 706, the first terminal completes media negotiation with the virtual item AS, and the virtual item AS may notify the virtual item media service to play the media information corresponding to the virtual item.

707: The virtual item AS sends a ringing response message to the first terminal.

For example, the following may be specifically included: The virtual item AS sends a ringing response 180 message to a CSCF network element, and then the CSCF network element sends a ringing response 180 message to the first terminal, to indicate that the callee terminal of the call service is in a ringing and waiting period.

708: The virtual item call play platform sends a media data stream corresponding to the virtual item to the first terminal.

For example, the following may be specifically included: The virtual item media service sends the media data stream corresponding to the virtual item to the first terminal.

In an implementation, the media data stream corresponding to the virtual item may include at least one of the following content: media data corresponding to information about a user who gifts the virtual item, a name of the virtual item, blessing information, an animation of the virtual item, a special effect, a red packet, an interaction operation, a closing operation, or the like.

709: The first terminal plays the received media information.

The virtual item is played on a display of the first terminal. For example, as shown in FIG. 1, displayed content may include the information about the user who gifts the virtual item, for example, including but not limited to a name, a number, an avatar, or the like; information about the virtual item, including but not limited to the name, the special effect, the animation, the blessing information, or the like of the virtual item; and an interaction operation, for example, a red packet, an interaction button, or a close button.

710: Implement interaction processing on the virtual item.

For example, the virtual item may support button interaction. For example, pressing 1# may indicate sending appreciation information to a gifter of the virtual item, and pressing 9# may indicate reporting a request to disable a virtual item delivery function. Alternatively, the virtual item may support screen hotspot button interaction in a technical condition in which a network and a terminal support interactive data transmission. For example, interaction operations such as receiving a red packet, one-click appreciation, and one-click disabling electronic gift play are supported. Specifically, the first terminal generates an interaction message in response to an interaction operation of the user, and may send the interaction message to the virtual item media service. The virtual item media service processes the interaction operation, generates corresponding media content or an interaction instruction, and sends the media content or the interaction instruction to the first terminal, thereby implementing interaction processing.

711: The second terminal is off-hook or in a call, and play of a ring back tone or the virtual item ends.

In an implementation, if the callee terminal of the call is off-hook to answer, call connection may be implemented between the caller terminal and the callee terminal, and a two-way call may be performed. After the call of the two parties ends, if either party performs a hang up operation, the call service is terminated.

In the foregoing scenario, play of the virtual item delivery task may be stopped under a corresponding event based on a setting. For example, it may be set that the virtual item is played in only a call ringing and waiting period. In this case, play of the virtual item is stopped when the callee terminal is off-hook. For another example, the virtual item delivery task may continue to be played for a short time or continuously in a call period in which a call connection is established. In this case, it may be selected to play for a short time in the call period and then stop the play, or continue play until the call is hung up and then stop the play.

The foregoing setting of stopping play of the virtual item may be set locally on the terminal, or may be set by the terminal by accessing the virtual item operation service platform. This is not limited in this application.

712: The virtual item call play platform sends virtual item delivery prompt information to the first terminal.

Refer to the foregoing step 509.

In an implementation, if a plurality of pieces of media content exist in the media data corresponding to the virtual item, or other media services such as an audio or video ring back tone exist in the network, the virtual item media service needs to transcode and overlay the plurality of pieces of media content, to overlay the plurality of pieces of media content into one fused media data stream, and push the fused media data stream to the terminal through the network.

For example, in this scenario, the media data stream corresponding to the virtual item may include a media data stream of at least one virtual item, and further include a media data stream corresponding to a ring back tone service or a customized ringing tone service of the terminal (for example, a terminal that delivers the virtual item is the callee terminal).

Specifically, the virtual item media service may perform real-time transcoding and overlaying on a plurality of media data streams corresponding to the terminal, to obtain a video data stream and/or an audio data stream. The video data stream includes a visual media data stream of at least one virtual item, for example, including information about a user who gifts the virtual item, a name of the virtual item, blessing information, a visual animation or special effect of the virtual item, or the like; and a visual media data stream corresponding to the ring back tone service and/or the customized ringing tone service of the terminal. The audio data stream includes an audio data stream of at least one virtual item, for example, including a blessing voice, a sound special effect, background music, or the like; and an audio data stream corresponding to the ring back tone service and/or the customized ringing tone service of the terminal. Then, the virtual item media service fuses the video data stream and the audio data stream into one media data stream, and sends the media data stream to the terminal through the network.

In an implementation, a function of the virtual item call play platform may be implemented by using an independent logical network element, or may be implemented by extending a function of an existing network element, for example, implemented by using a call play platform of a ring back tone service, or implemented by using a call play platform of a customized ringing tone service, or implemented by using a call play platform based on network VoLTE.

Based on the foregoing implementation scenario, the virtual item AS may be implemented by using an independent logical network element, or may be implemented by extending a function of an existing service AS, for example, implemented by using a ring back tone AS, or implemented by using a customized ringing tone AS, or implemented by using a VoLTE AS. Similarly, the virtual item media service or the virtual item delivery control service may be implemented by using an independent logical network element, or may be implemented by extending a function of an existing network element.

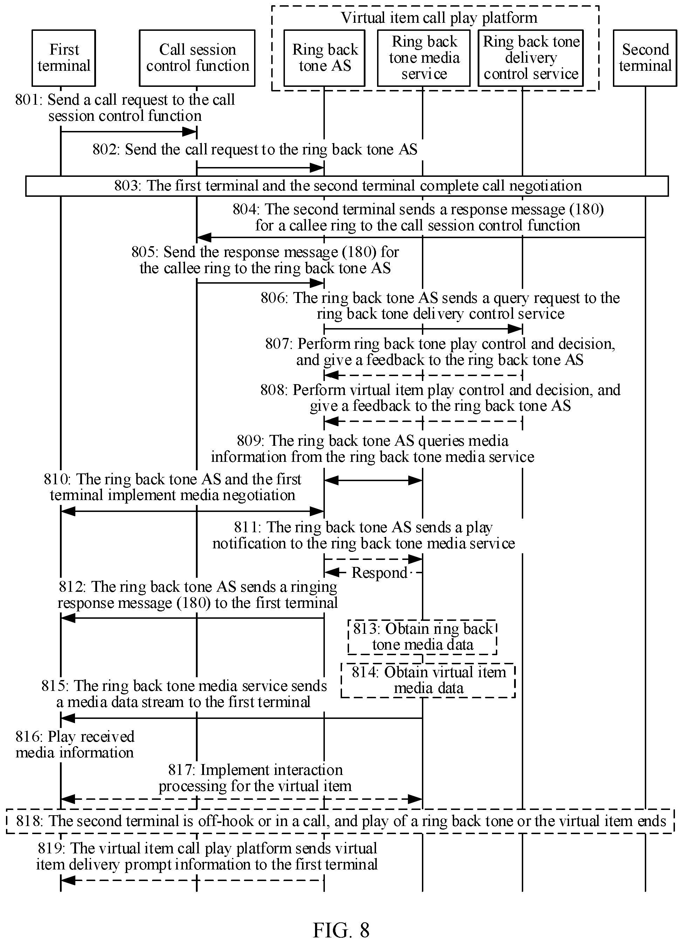

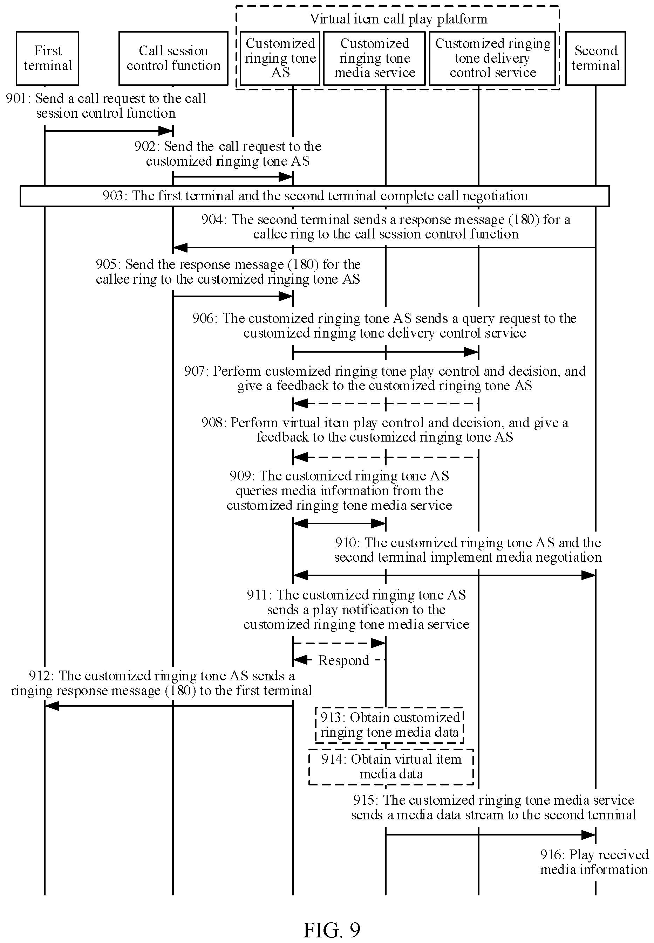

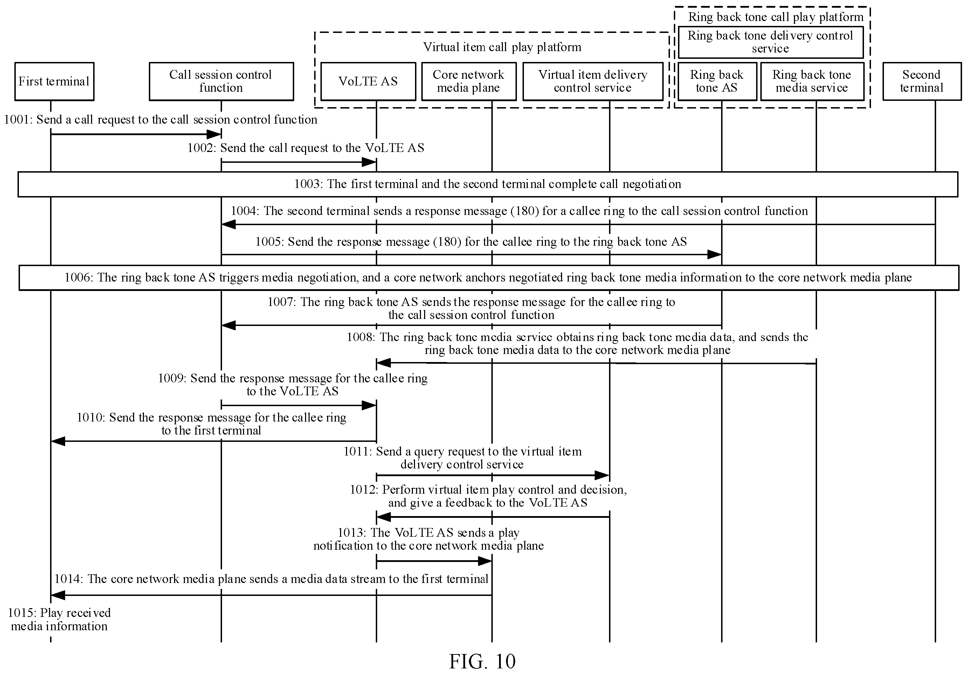

The following separately describes implementation procedures of different implementations with reference to the accompanying drawings. An embodiment shown in FIG. 8 is an example in which a virtual item service is extended on a ring back tone AS, and a virtual item is delivered to a caller terminal in a scenario in which a recipient serves as the caller terminal. An embodiment shown in FIG. 9 is an example in which a virtual item service is extended on a customized ringing tone AS, and a virtual item is delivered to a callee terminal in a scenario in which a recipient serves as the callee terminal. An embodiment shown in FIG. 10 is an example in which a virtual item service is extended on a VoLTE AS, and a virtual item is delivered to a caller terminal in a scenario in which a recipient serves as the caller terminal.

As shown in FIG. 8, an extended virtual item service is implemented on a call play platform of a ring back tone service. A ring back tone delivery control service may support both play control of a ring back tone service and delivery control of a virtual item. For each call request of a user, whether a video ring back tone and/or a virtual item need/needs to be delivered during a current call may be determined based on ring back tone service data and a virtual item delivery task that are delivered by an operation management platform. The following scenarios are specifically included.

(1) If it is determined that the first terminal has only a ring back tone service and has no virtual item delivery task, the ring back tone delivery control service determines to play only ring back tone content for the first terminal.

(2) If it is determined that the first terminal has only a virtual item delivery task and has no ring back tone service, the ring back tone delivery control service determines to play only a virtual item for the first terminal. Optionally, a default background video and the virtual item may be played.

(3) If it is determined that the first terminal has both a ring back tone service and a virtual item delivery task, the ring back tone delivery control service determines to play a ring back tone and a virtual item for the first terminal, performs real-time transcoding and overlaying on two pieces of media content of the ring back tone and the virtual item to form a media data stream, and sends the media data stream to the first terminal through the network for play.

In an implementation, to implement overlaid play of the ring back tone content and the virtual item, a high-performance media encoding and decoding capability needs to be implemented on a ring back tone media service, to support real-time transcoding and overlaying on media data of the virtual item and media data of the ring back tone to form one media data stream in a call play process. For specific implementation, refer to an existing high-speed video encoding and decoding technology, and implementation may be accelerated by using a dedicated chip such as a graphics processing unit (Graphics Processing Unit, GPU) or an application-specific integrated circuit (Application-Specific Integrated Circuit, ASIC), but this is not limited.

In addition, the media data of the virtual item may be in a format such as graphics interchange format (Graphics Interchange Format, GIF), moving picture experts group 4 (Moving Picture Experts Group 4, MP4), or scalable vector graphics animation (Scalable Vector Graphics Animation, SVGA), and is not limited to the foregoing formats. Optionally, the virtual item operation service platform may implement, in a content management process, uniform conversion of a media format that meets a call play format and an encoding requirement.

As shown in FIG. 8, this application provides a call process implementation method. The method may include the following steps.

801: A first terminal sends a call request to a call session control function.

802: The call session control function sends the call request to a ring back tone AS.

The call session control function may determine, based on service information (such as subscription information) subscribed to by a caller user and a callee user in the current call request, whether a ring back tone or a virtual item delivery task is included, and if the ring back tone or the virtual item delivery task is included, send the call request to the ring back tone AS. The ring back tone AS extends a virtual item service. In addition, similar to a subscription process of a virtual service, for example, after a user subscribes to a ring back tone service, a ring back tone operation service platform may generate a ring back tone delivery task for the user, and the call session control function may obtain the ring back tone delivery task of the user.

803: The first terminal completes call negotiation with a second terminal.

804: The second terminal sends a response message for a callee ring to the call session control function.

805: The call session control function sends the response message for the callee ring to the ring back tone AS.

806: The ring back tone AS sends a query request to a ring back tone delivery control service.

The query request is used to request to query a delivery control policy of a ring back tone service of a terminal corresponding to the call request and a delivery control policy of a virtual item. The ring back tone delivery control service extends a logical function of a virtual item delivery control service.

807: The ring back tone delivery control service performs ring back tone play control and decision, and gives a feedback to the ring back tone AS.

The ring back tone delivery control service may determine, based on subscription information of the ring back tone service, whether the caller user of the call has subscribed to the ring back tone service, determine whether to play a ring back tone for the current call service, determine played ring back tone content, and feed back a decision result to the ring back tone AS.

808: The ring back tone delivery control service performs virtual item play control and decision, and gives a feedback to the ring back tone AS.

The ring back tone delivery control service may determine, based on a virtual item delivery task (for example, including subscription information), whether the caller user of the call has a virtual item delivery task, determine whether to deliver a virtual item for the caller user of the current call service, determine delivery content of the virtual item, and feed back a decision result to the ring back tone AS. For a specific decision basis, refer to the foregoing step 705b, and details are not described herein again.

It should be noted that the ring back tone delivery control service may perform query for ring back tone and virtual item control and decision separately and independently or together. This does not affect a final logic processing result, and is not limited herein.

809: The ring back tone AS queries media information from a ring back tone media service.

The ring back tone AS determines ring back tone content and/or virtual item content to be played, and requests the ring back tone media service to obtain media information corresponding to the ring back tone and/or the virtual item.

810: The ring back tone AS implements media negotiation with the first terminal.

The following may be specifically included: The ring back tone AS initiates media negotiation with the first terminal, and the first terminal sends a media negotiation response message, for example, a 200 message, to the ring back tone AS.

811: The ring back tone AS sends a play notification to the ring back tone media service.

After the first terminal completes media negotiation with the ring back tone AS, the ring back tone AS may notify the ring back tone media service to play the ring back tone and/or the virtual item.

812: The ring back tone AS sends a ringing response message to the first terminal.

813: The ring back tone media service obtains ring back tone media data.

The ring back tone media service obtains the ring back tone media content to play the ring back tone for the user. If a decision result in step 807 is that the ring back tone does not need to be played, the step is not performed.

814: The ring back tone media service obtains virtual item media data.

The ring back tone media service obtains media content corresponding to the virtual item, to play the virtual item for the user. If a decision result in step 808 is that the virtual item does not need to be delivered, the step is not performed.

815: The ring back tone media service sends a media data stream to the first terminal.

The ring back tone media service sends the media data stream to the first terminal through a network. If a plurality of pieces of media content such as the ring back tone and the virtual item need to be played at the same time, the ring back tone media server needs to perform real-time transcoding and overlaying on the plurality of pieces of media content, to overlay the plurality of pieces of media content into one media data stream, and then send the media data stream to the first terminal. If only the ring back tone or only the virtual item is played, and corresponding media content meets a coding format defined by the first terminal and the network, real-time transcoding is not required, and the content is directly transmitted and played without transcoding.

816: The first terminal plays the received media information.

The first terminal plays the ring back tone or the virtual item on a screen, or displays the ring back tone and the virtual item in an overlaid manner.

In an implementation, the method may further include one or more of the following steps. Refer to the foregoing steps 710 to 712.

817: Implement interaction processing on the virtual item.

818: The second terminal is off-hook or in a call, and play of a ring back tone or the virtual item ends.

819: The virtual item call play platform sends virtual item delivery prompt information to the first terminal.

In the foregoing implementation method, the virtual item service is extended by using the call play platform of the ring back tone service. Specifically, the ring back tone AS may be extended to implement a virtual item AS, the ring back tone media service may be extended to implement a virtual item media service, and the ring back tone delivery control service may be extended to implement a virtual item delivery control service, so as to implement separate play of the ring back tone or the virtual item, and overlaid play of the ring back tone and the virtual item, thereby improving fun and social interaction experience, and enriching call service experience of the user. In addition, functions of existing network elements are extended, so that a problem of a waste of network resources caused by deployment of an excessive quantity of network nodes can be avoided, and communication efficiency can be improved.

In addition, as shown in FIG. 9, this application provides a call process implementation method. An extended virtual item service is implemented on a call play platform of a customized ringing tone service. A customized ringing tone delivery control service may support both play control of a customized ringing tone service and delivery control of a virtual item. The method may include the following steps.

901: A first terminal sends a call request to a call session control function.

902: The call session control function sends the call request to a customized ringing tone AS.

The call session control function may determine, based on service information (such as subscription information) subscribed to by a caller user and a callee user in the current call request, whether a customized ringing tone or a virtual item delivery task is included, and if the customized ringing tone or the virtual item delivery task is included, send the call request to the customized ringing tone AS. The customized ringing tone AS extends a virtual item service.

903: The first terminal completes call negotiation with a second terminal.

904: The second terminal sends a response message for a callee ring to the call session control function.

905: The call session control function sends the response message for the callee ring to the customized ringing tone AS.

906: The customized ringing tone AS sends a query request to the customized ringing tone delivery control service.

The query request is used to request to query a delivery control policy of a customized ringing tone service of a callee terminal corresponding to the call request and a delivery control policy of a virtual item. The customized ringing tone delivery control service extends a logical function of a virtual item delivery control service.

Similar to the foregoing description, the customized ringing tone delivery control service supports both play control of a customized ringing tone and delivery control of a virtual item. In each call request, whether a customized ringing tone and a virtual item need to be played during a current call may be determined based on customized ringing tone service data and a virtual item delivery task that are delivered by an operation management platform. The following scenarios are specifically included.

(1) If it is determined that the second terminal has only a customized ringing tone service and has no virtual item delivery task, the customized ringing tone delivery control service determines to play only ring back tone content for the second terminal.

(2) If it is determined that the second terminal has only a virtual item delivery task and has no customized ringing tone service, the customized ringing tone delivery control service determines to play only a virtual item for the second terminal. Optionally, a default background video and the virtual item may be played.

(3) If it is determined that the second terminal has both a customized ringing tone service and a virtual item delivery task, the customized ringing tone delivery control service determines to play a customized ringing tone and a virtual item for the second terminal, performs real-time transcoding and overlaying on two pieces of media content of the customized ringing tone and the virtual item to form a media data stream, and sends the media data stream to the second terminal through the network for play.

907: The customized ringing tone delivery control service performs customized ringing tone play control and decision, and gives a feedback to the customized ringing tone AS.

The customized ringing tone delivery control service may determine, based on subscription information of the customized ringing tone service, whether the callee user, that is, the second terminal, of the call has subscribed to the customized ringing tone service, determine whether to play a customized ringing tone for the current call service, determine played customized ringing tone content, and feed back a decision result to the customized ringing tone AS.

908: The customized ringing tone delivery control service performs virtual item play control and decision, and gives a feedback to the customized ringing tone AS.

The customized ringing tone delivery control service may determine, based on a virtual item delivery task (for example, including subscription information), whether the callee user, that is, the second terminal, of the call has a virtual item delivery task, determine whether to deliver a virtual item for the callee user of the current call service, determine delivery content of the virtual item, and feed back a decision result to the customized ringing tone AS. For a specific decision basis, refer to the foregoing step 705b, and details are not described herein again.

It should be noted that the customized ringing tone delivery control service may perform query for customized ringing tone and virtual item control and decision separately and independently or together. This does not affect a final logic processing result, and is not limited herein.

909: The customized ringing tone AS queries media information from a customized ringing tone media service.

The customized ringing tone AS determines customized ringing tone content and/or virtual item content to be played, and requests the customized ringing tone media service to obtain media information corresponding to the customized ringing tone and/or the virtual item.

910: The customized ringing tone AS implements media negotiation with the second terminal.

The following may be specifically included: The customized ringing tone AS initiates media negotiation with the second terminal, and the second terminal sends a media negotiation response message, for example, a 200 message, to the customized ringing tone AS.

911: The customized ringing tone AS sends a play notification to the customized ringing tone media service.

After the second terminal completes media negotiation with the customized ringing tone AS, the customized ringing tone AS may notify the customized ringing tone media service to play the customized ringing tone and/or the virtual item.

912: The customized ringing tone AS sends a ringing response message to the first terminal.

913: The customized ringing tone media service obtains customized ringing tone media data.

The customized ringing tone media service obtains the customized ringing tone media content to play the customized ringing tone for the user. If a decision result in step 907 is that the customized ringing tone does not need to be played, the step is not performed.

914: The customized ringing tone media service obtains virtual item media data.

The customized ringing tone media service obtains media content corresponding to the virtual item, to play the virtual item for the user. If a decision result in step 908 is that the virtual item does not need to be delivered, the step is not performed.

915: The customized ringing tone media service sends a media data stream to the second terminal.

The customized ringing tone media server sends the media data stream to the second terminal through a network. If a plurality of pieces of media content such as the customized ringing tone and the virtual item need to be played at the same time, the customized ringing tone media server needs to perform real-time transcoding and overlaying on the plurality of pieces of media content, to overlay the plurality of pieces of media content into one media data stream, and then send the media data stream to the first terminal. If only the customized ringing tone or only the virtual item is played, and corresponding media content meets a coding format defined by the second terminal and the network, real-time transcoding is not required, and the content is directly transmitted and played without transcoding.

916: The second terminal plays the received media information.

The second terminal plays the customized ringing tone or the virtual item on a screen or displays the customized ringing tone and the virtual item in an overlaid manner.

In an implementation, the method may further include steps similar to the foregoing steps 817 to 819, and details are not described herein.

As shown in FIG. 10, an extended virtual item service is implemented on a call play platform of a core network VoLTE service. A VoLTE call play control platform may include a VoLTE AS, a core network media plane, and a virtual item delivery control service. The VoLTE AS extends a virtual item service. FIG. 10 describes an implementation of this application by using an example in which a caller terminal of a call service has both a ring back tone service and a virtual item delivery service.

As shown in FIG. 10, this application provides a call process implementation method. The method may include the following steps.

1001: A first terminal sends a call request to a call session control function.

1002: The call session control function sends the call request to the VoLTE AS.

The call session control function may determine, based on service information (such as subscription information) subscribed to by a caller user and a callee user in the current call request, whether a virtual item delivery task is included, and if the virtual item delivery task is included, send the call request to the VoLTE AS.

1003: The first terminal completes call negotiation with a second terminal.

1004: The second terminal sends a response message for a callee ring to the call session control function.

1005: The call session control function sends the response message for the callee ring to a ring back tone AS.

1006: The ring back tone AS triggers media negotiation, and a core network anchors negotiated ring back tone media information to the core network media plane.

The caller user of the call has a ring back tone service. Therefore, the ring back tone AS triggers media negotiation to determine the ring back tone media information. Further, the core network may anchor the negotiated ring back tone media information to the core network media plane, so as to implement transcoding and overlaying transmission and play of a plurality of pieces of media content.

That is, the core network may anchor media information of a related application to the core network media plane. The core network media plane implements delivery of a virtual item and another service based on identification of existing media in the network. The following scenarios may be specifically included.

If it is identified that there is no other media content to be played in the network, the core network media plane is triggered to play only the virtual item. Optionally, a default background video and the virtual item may be played.

If there is other media content to be played for a same terminal side in the network, including but not limited to a ring back tone, a customized ringing tone, a video incoming call card, or a new call media service (as shown in FIG. 10, a ring back tone service is used as an example), the core network media plane may perform real-time transcoding and overlaying on a plurality of pieces of media content, for example, perform real-time transcoding and overlaying on two pieces of media content of the ring back tone and the virtual item to form a media data stream, and send the media data stream to the first terminal through the network for play.

In an implementation, to implement overlaid play of the virtual item and other media content, a core network SBC media server needs to implement a high-performance media encoding and decoding capability, to support real-time overlaying and transcoding of the virtual item and other media content such as the ring back tone into one media data stream in a call play process. For specific implementation, refer to an existing high-speed video encoding and decoding technology. Implementation may be accelerated by using a dedicated chip such as a GPU or an ASIC, but this is not limited.

1007: The ring back tone AS sends the response message for the callee ring to the call session control function.

1008: The ring back tone media service obtains the ring back tone media data, and sends the ring back tone media data to the core network media plane.

1009: The call session control function sends the response message for the callee ring to the VoLTE AS.

1010: The VoLTE AS sends the response message for the callee ring to the first terminal.

After media negotiation is completed, the ring back tone AS may forward a 180 ringing message to a caller side, and notify the ring back tone media service to play the ring back tone.

1011: The VoLTE AS sends a query request to the virtual item delivery control service.

1012: The virtual item delivery control service performs virtual item play control and decision, and gives a feedback to the VoLTE AS.

The virtual item delivery control service may determine, based on a virtual item delivery task, whether to deliver a virtual item for the caller user of the current call service, determine delivery content of the virtual item, and feed back a decision result to the VoLTE AS.

1013: The VoLTE AS sends a play notification to the core network media plane.

After the first terminal completes media negotiation with the VoLTE AS, the VoLTE AS may notify the core network media plane to play the virtual item.

1014: The core network media plane sends a media data stream to the first terminal.

The core network media plane sends the media data stream to the first terminal. If a plurality of pieces of media content such as the ring back tone and the virtual item need to be played at the same time, the ring back tone media server needs to perform real-time transcoding and overlaying on the plurality of pieces of media content, to overlay the plurality of pieces of media content into one media data stream, and then send the media data stream to the first terminal. If only the ring back tone or only the virtual item is played, and corresponding media content meets a coding format defined by the first terminal and the network, real-time transcoding is not required, and the content is directly transmitted and played without transcoding.

1015: The first terminal plays the received media information.

The first terminal plays the ring back tone or the virtual item on a screen, or displays the ring back tone and the virtual item in an overlaid manner.

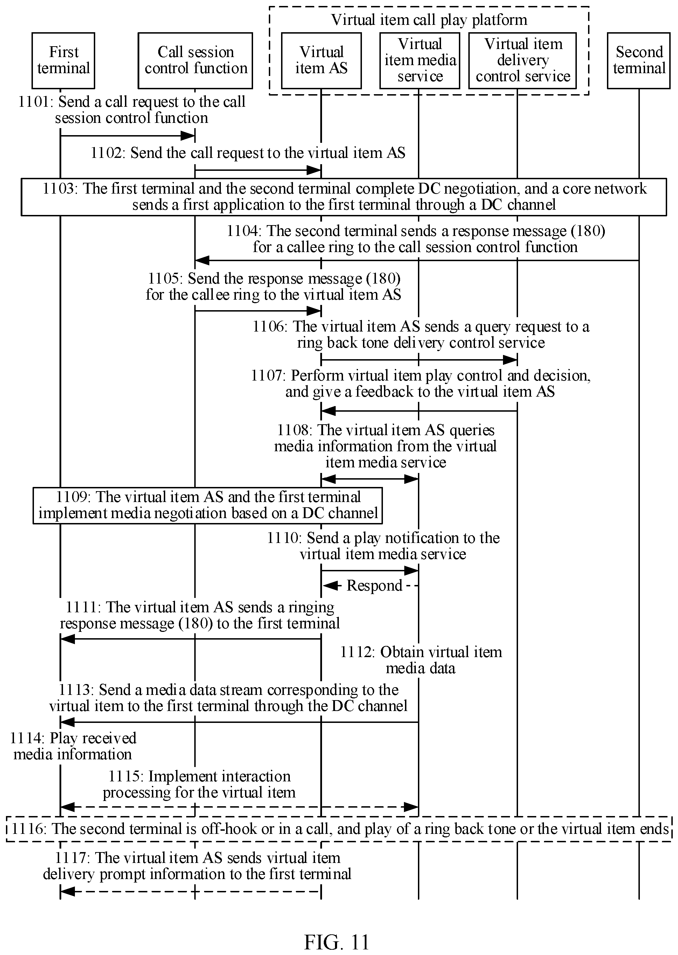

In another implementation, a terminal may further receive, through a data channel (Data Channel, DC), a media data stream corresponding to a virtual item from a virtual item media service. An embodiment shown in FIG. 11 is an example in which a virtual item AS is implemented by using an independent logical network element, and a virtual item is delivered to a caller terminal in a scenario in which a recipient serves as the caller terminal. The virtual item AS may be implemented independently, or a corresponding logical function may be implemented based on an AS on a live network.

As shown in FIG. 11, this application provides a call process implementation method. The method may include the following steps.

1101: A first terminal sends a call request to a call session control function.

1102: The call session control function sends the call request to the virtual item AS.

The call session control function may determine, based on service information (such as subscription information) subscribed to by a caller user and a callee user in the current call request, whether a virtual item delivery task is included, and if the virtual item delivery task is included, send the call request to the virtual item AS.

1103: The first terminal completes DC negotiation with a second terminal, and a core network sends a first application to the first terminal through a DC channel.

The first terminal and the second terminal perform call negotiation, and negotiate to establish a basic DC channel, for example, BootStrap DC, between a caller terminal, that is, the first terminal, and a network side in a scenario with a DC capability. The core network sends the first application to the first terminal through the DC channel. For example, a CSCF sends the first application to the first terminal. The first application may be an application or an applet used to implement a virtual item service, or an applet that includes a virtual item application.

1104: The second terminal sends a response message for a callee ring to the call session control function.

1105: The call session control function sends the response message for the callee ring to the virtual item AS.

1106: The virtual item AS sends a query request to a virtual item delivery control service.

1107: The virtual item delivery control service performs virtual item play control and decision, and gives a feedback to the virtual item AS.

The virtual item delivery control service may determine, based on subscription information of a ring back tone service, whether to deliver a virtual item for the caller user of the current call service, determine delivery content of the virtual item, and feed back a decision result to the virtual item AS.

1108: The virtual item AS queries media information from a virtual item media service.

The virtual item AS determines content of a to-be-played virtual item, and requests the virtual item media service to obtain the media information corresponding to the virtual item.

1109: The virtual item AS implements DC channel-based media negotiation with the first terminal.

The virtual item AS initiates DC channel-based media negotiation with the first terminal, for example, application (Application) DC media negotiation.

The following may be specifically included: The virtual item AS sends a DC media negotiation request to the first terminal, and the first terminal sends a DC media negotiation response message such as a 200 message to the virtual item AS.

1110: The virtual item AS sends a play notification to the virtual item media service.

After the first terminal completes media negotiation with the virtual item AS, the virtual item AS may notify the virtual item media service to play the virtual item.

1111: The virtual item AS sends a ringing response message to the first terminal.

1112: The virtual item media service obtains virtual item media data.

The virtual item media service obtains media content of the virtual item, to play the virtual item for the user.

1113: The virtual item media service sends a media data stream corresponding to the virtual item to the first terminal through the DC channel.

1114: The first terminal plays the received media information.

The first terminal may load, by using the first application received in step 1103, the virtual item media data stream delivered by the network side based on the DC channel, and play the virtual item media data stream, so that the virtual item may be displayed on a display in a form of a floating layer or a pop-up window.

In an implementation, the method may further include one or more of the following steps.

1115: Implement interaction processing on the virtual item.

Refer to the foregoing step 710. Exchange of a data stream and signaling of an interaction operation may be implemented between the first terminal and the virtual item media service through the DC channel.

1116: The second terminal is off-hook or in a call, and play of a ring back tone or the virtual item ends.

1117: The virtual item AS sends virtual item delivery prompt information to the first terminal.

In the foregoing implementation method, a virtual item service is extended under a call service, so that an application of the virtual item may not depend on a platform or an application, thereby enriching fun of a call process, especially in a ringing and waiting phase, and adding an effective social manner of transferring emotions and expressing blessings between users, so that user experience is improved. In addition, the virtual item delivery service is implemented based on the DC channel, so that the virtual item and other to-be-played media data can be independently transmitted and displayed by layer, thereby improving communication efficiency and enriching play effects.

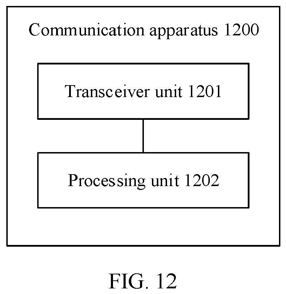

In addition, based on the foregoing implementations, this application further provides a communication apparatus, configured to implement the steps performed by the first terminal in the foregoing embodiments. As shown in FIG. 12, a communication apparatus 1200 includes a transceiver unit 1201 and a processing unit 1202.

The transceiver unit 1201 is configured to receive a media data stream corresponding to a virtual item, where the virtual item includes information about a user who gifts the virtual item, and an animation or a special effect of the virtual item.

The processing unit 1202 is configured to play media information corresponding to the virtual item in a call process, where the terminal is a terminal of a caller user of a call service or a terminal of a callee user of the call service.

In an implementation, the media data stream corresponding to the virtual item includes at least one of the following content: the information about the user who gifts the virtual item, a name of the virtual item, blessing information, the animation of the virtual item, the special effect, a red packet, an interaction operation, or a closing operation.

In an implementation, the processing unit 1202 is configured to play the media information corresponding to the virtual item in a call ringing and waiting period and/or a call period in which a call is connected.

In an implementation, the media data stream corresponding to the virtual item includes a media data stream of at least one virtual item, and further includes a media data stream corresponding to a ring back tone service or a customized ringing tone service of the terminal.

In an implementation, the transceiver unit 1201 specifically performs the following: receiving a converged data stream from a virtual item media service, where the converged data stream includes the media data stream of the at least one virtual item, and further includes the media data stream corresponding to the ring back tone service or the customized ringing tone service of the terminal.

In an implementation, the transceiver unit 1201 specifically performs the following: receiving, by the terminal, the media data stream corresponding to the virtual item from the virtual item media service through a data channel DC.

In an implementation, the transceiver unit 1201 specifically performs the following: completing data channel DC negotiation, and receiving, through the DC channel, a first application used to implement a virtual item service; establishing, by the terminal, the DC channel with the virtual item media service; and after receiving the media data stream corresponding to the virtual item through the DC channel, playing, by the terminal, the media information corresponding to the virtual item by using the first application.

In an implementation, the processing unit 1202 is further configured to: order or subscribe to the virtual item service through a virtual item operation service platform, and set information about a recipient user, to deliver the virtual item to a terminal of the recipient user.

In an implementation, the processing unit 1202 is further configured to set, through the virtual item operation service platform, at least one of a quantity of virtual item delivery times, a delivery frequency, a delivery validity period, a delivery priority, and specified play, cyclic play, or random play of a plurality of virtual items.

The processing unit 1202 specifically performs the following: The virtual item service is implemented by an application server AS of a video ring back tone service, implemented by an AS of a video customized ringing tone service, implemented by an AS based on an internet protocol multimedia subsystem IMS voice service, or implemented by an AS of the virtual item service.

In addition, this application further provides a communication apparatus, configured to implement the steps performed by the call session control function in the foregoing embodiments. As shown in FIG. 12, a communication apparatus 1200 includes a transceiver unit 1201 and a processing unit 1202.

The transceiver unit 1201 is configured to receive a call request from a first terminal.

The processing unit 1202 is configured to send the call request to a virtual item call play platform based on subscription information of a virtual item service of the terminal, where the call request is used to trigger delivery of the virtual item to the first terminal and/or a second terminal, and the second terminal is a terminal of a callee user corresponding to the call request.

In an implementation, subscription information of the virtual item is generated based on a virtual item service to which a user subscribes.

In an implementation, the transceiver unit 1201 is further configured to: receive a response message for a callee ring from the second terminal; and send the response message for the callee ring to the virtual item call play platform.

In addition, this application further provides a communication apparatus, configured to implement the steps performed by the virtual item call play platform in the foregoing embodiments. As shown in FIG. 12, a communication apparatus 1200 includes a transceiver unit 1201 and a processing unit 1202.

The transceiver unit 1201 is configured to receive a call request, where the call request is used to trigger delivery of a virtual item to a terminal, and the terminal is a terminal of a caller user corresponding to the call request or a terminal of a callee user corresponding to the call request.

The processing unit 1202 is configured to determine the corresponding virtual item based on a virtual item delivery task of the terminal. The transceiver unit is further configured to send a media data stream corresponding to the virtual item to the terminal.

In an implementation, if the terminal is the terminal of the caller user of the call service and subscribes to an audio or video ring back tone service, or if the terminal is the terminal of the callee user of the call service and subscribes to an audio or video customized ringing tone service, the media data stream corresponding to the virtual item includes a media data stream of at least one virtual item, and further includes a media data stream corresponding to the audio or video ring back tone service or the audio or video customized ringing tone service of the terminal.

In an implementation, the processing unit 1202 is specifically configured to perform real-time transcoding and overlaying on a plurality of media data streams corresponding to the terminal to obtain a video data stream and/or an audio data stream, where the video data stream includes a visual media data stream of at least one virtual item and a visual media data stream corresponding to the video ring back tone service or the video customized ringing tone service of the terminal, and the audio data stream includes an audio data stream of at least one virtual item and an audio data stream corresponding to the audio/video ring back tone service or the audio/video customized ringing tone service of the terminal. The transceiver unit 1201 is specifically configured to send the visual media data stream and/or the audio data stream to the terminal.

In an implementation, the transceiver unit 1201 is specifically configured to send the media data stream corresponding to the virtual item to the terminal through a data channel DC.

In an implementation, the transceiver unit 1201 is specifically configured to: complete data channel DC negotiation with the terminal, and send, to the terminal through the DC channel, a first application used to implement a virtual item service; and establish the DC channel with the terminal, to send the media data stream corresponding to the virtual item to the terminal.

In an implementation, the media data stream corresponding to the virtual item includes at least one of the following content: information about a user who gifts the virtual item, a name of the virtual item, blessing information, an animation of the virtual item, a special effect, a red packet, an interaction operation, or a closing operation.

In an implementation, the virtual item call play platform is implemented by a call play platform of the video ring back tone service, implemented by a call play platform of the video customized ringing tone service, or implemented by a call play platform based on an internet protocol multimedia subsystem IMS voice service.

In addition, this application further provides a communication apparatus, configured to implement the steps performed by the application server AS of the virtual item service in the foregoing embodiments. As shown in FIG. 12, a communication apparatus 1200 includes a transceiver unit 1201.

The transceiver unit 1201 is configured to receive a call request and a response message for a callee ring, where the call request triggers delivery of a virtual item to a terminal, and the terminal is a terminal of a caller user corresponding to the call request or a terminal of a callee user corresponding to the call request.

The transceiver unit 1201 is further configured to send a query request to a virtual item delivery control service, where the query request is used to query whether to deliver the virtual item to the terminal.

In an implementation, the transceiver unit 1201 is further configured to receive a query response from the virtual item delivery control service.

In an implementation, the query response further includes information about a to-be-delivered virtual item.

In an implementation, the transceiver unit 1201 is further configured to: request a virtual item media service to query media information of the to-be-delivered virtual item; and receive a response from the virtual item media service, where the response indicates the media information of the to-be-delivered virtual item.

In an implementation, the transceiver unit 1201 is further configured to send a play notification to the virtual item media service, to indicate to play the virtual item for the terminal.

In addition, this application further provides a communication apparatus, configured to implement the steps performed by the virtual item delivery control service in the foregoing embodiments. As shown in FIG. 12, a communication apparatus 1200 includes a transceiver unit 1201 and a processing unit 1202.

The transceiver unit 1201 is configured to receive a query request from an application server AS of a virtual item service, where the query request is used to query whether to deliver a virtual item to a terminal.

The processing unit 1202 is configured to determine, based on a virtual item delivery task, whether to deliver the virtual item to the terminal.

In an implementation, the transceiver unit 1201 is further configured to send a query response to the AS of the virtual item service.

In an implementation, the query response further includes information about a to-be-delivered virtual item.

In addition, this application further provides a communication apparatus, configured to implement the steps performed by the virtual item media service in the foregoing embodiments. As shown in FIG. 12, a communication apparatus 1200 includes a transceiver unit 1201 and a processing unit 1202.

The transceiver unit 1201 is configured to receive a media query request from an application server AS of a virtual item service, where the media query request includes information about a terminal.

The processing unit 1202 is configured to determine, based on a virtual item delivery task of the terminal, media information of a to-be-delivered virtual item corresponding to the terminal.

The transceiver unit 1201 is further configured to send a media data stream corresponding to the to-be-delivered virtual item to the terminal.

In an implementation, the transceiver unit 1201 is further configured to send a response to the AS of the virtual item service, where the response indicates the media information of the to-be-delivered virtual item.

In an implementation, the transceiver unit 1201 is further configured to receive a play notification from the AS of the virtual item service, to indicate to play the to-be-delivered virtual item for the terminal.

In an implementation, the media data stream corresponding to the virtual item includes at least one of the following content: information about a user who gifts the virtual item, a name of the virtual item, blessing information, an animation of the virtual item, a special effect, a red packet, an interaction operation, or a closing operation.

It should be noted that, for a specific execution process and embodiment of the foregoing apparatus, refer to steps performed by the terminal or the network device (such as the call session control function, the virtual item call play platform, the virtual item AS, the virtual item delivery control service, or the virtual item media service) and related descriptions in the foregoing method embodiments. For a technical problem to be resolved and brought technical effects, refer to the content described in the foregoing embodiments. Details are not described one by one herein.

In this embodiment, the sidelink transmission apparatus is presented in a form of obtaining each functional module through division in an integrated manner. The "unit" or "module" herein may be a specific circuit, a processor and a memory that execute one or more software or firmware programs, an integrated logic circuit, and/or another component that can provide the foregoing functions. In a simple embodiment, a person skilled in the art may figure out that the communication apparatus may be in the form shown in FIG. 3.

The communication apparatus in the foregoing apparatus embodiments may exactly correspond to the terminal device or the network device in the method embodiments, and a corresponding module or unit performs a corresponding step. For example, when the apparatus is implemented in a form of a chip, the transceiver unit may be an interface circuit that is of the chip and that is configured to receive a signal from another chip or apparatus. The foregoing transceiver unit for sending or receiving is an interface circuit of the apparatus, and is configured to send a signal to another apparatus. For example, when the apparatus is implemented in a form of a chip, the transceiver unit may be an interface circuit configured to send a signal to another chip or apparatus.

In an example embodiment, a computer-readable storage medium including instructions or a computer program product is further provided. The instructions may be executed by the processing unit 1202 of the communication apparatus 1200 to complete the method in the foregoing embodiments. Therefore, for technical effects that can be achieved, refer to the foregoing method embodiments. Details are not described herein again.

This application further provides a computer program product. The computer program product includes instructions, and when the instructions are executed, a computer is enabled to perform an operation corresponding to the terminal device or the network device in the foregoing method.

An embodiment of this application further provides a system chip. The system chip includes a processing unit and a transceiver unit. The processing unit may be, for example, a processor, and the transceiver unit may be, for example, an input/output interface, a pin, a circuit, or the like. The processing unit may execute computer instructions, so that a communication apparatus in which the chip is used performs the operations of the terminal device and the network device in the method provided in the foregoing embodiments of this application.

Optionally, any communication apparatus provided in embodiments of this application may include the system chip.

Optionally, the computer instructions are stored in a storage unit.

An embodiment of this application further provides a communication system. The communication system may include any terminal device, call session control function, and virtual item call play platform in the foregoing implementations. In an implementation, the virtual item call play platform may include a virtual item AS, a virtual item delivery control service, and a virtual item media service.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A call process implementation method, applied to a call session control function, wherein the method comprises:
receiving a call request from a first terminal; and
sending the call request to a virtual item call play platform based on subscription information of a virtual item service of the terminal, wherein
the call request is used to trigger delivery of a virtual item to the first terminal and/or a second terminal, and the second terminal is a terminal of a callee user corresponding to the call request.

2. The method according to claim 1, wherein subscription information of the virtual item is generated based on a virtual item service to which a user subscribes.

3. The method according to claim 1 or 2, wherein the method further comprises:
receiving a response message for a callee ring from the second terminal; and
sending the response message for the callee ring to the virtual item call play platform.

4. A call process implementation method, applied to a virtual item call play platform, wherein the method comprises:
receiving a call request, wherein the call request is used to trigger delivery of a virtual item to a terminal, and the terminal is a terminal of a caller user corresponding to the call request or a terminal of a callee user corresponding to the call request; and
sending a media data stream corresponding to the virtual item to the terminal, wherein the media data stream corresponding to the virtual item is determined based on a virtual item delivery task of the terminal.

5. The method according to claim 4, wherein if the terminal is the terminal of the caller user of the call request and subscribes to a ring back tone service, the media data stream corresponding to the virtual item comprises a media data stream of at least one virtual item, and further comprises the ring back tone service of the terminal; or
if the terminal is the terminal of the callee user of the call service and subscribes to a customized ringing tone service, the media data stream corresponding to the virtual item comprises a media data stream of at least one virtual item, and further comprises a media data stream corresponding to the customized ringing tone service.

6. The method according to claim 4 or 5, wherein the sending a media data stream corresponding to the virtual item to the terminal specifically comprises:
performing real-time transcoding and overlaying on a plurality of media data streams corresponding to the terminal to obtain a visual media data stream and/or an audio data stream, wherein the visual media data stream comprises a visual media data stream of at least one virtual item and a visual media data stream corresponding to the ring back tone service or the customized ringing tone service of the terminal, and the audio data stream comprises an audio data stream of at least one virtual item and an audio data stream corresponding to the ring back tone service or the customized ringing tone service of the terminal; and sending the visual media data stream and/or the audio data stream to the terminal.

7. The method according to any one of claims 4 to 6, wherein the sending a media data stream corresponding to the virtual item to the terminal specifically comprises:
sending the media data stream corresponding to the virtual item to the terminal through a data channel DC.

8. The method according to claim 7, wherein the method further comprises:
completing data channel DC negotiation with the terminal, and sending, to the terminal through the DC channel, a first application used to implement a virtual item service; and
establishing the DC channel with the terminal, to send the media data stream corresponding to the virtual item to the terminal.

9. The method according to any one of claims 4 to 8, wherein the media data stream corresponding to the virtual item comprises at least one of the following content: information about a user who gifts the virtual item, a name of the virtual item, blessing information, an animation of the virtual item, a special effect, a red packet, an interaction operation, or a closing operation.

10. The method according to any one of claims 4 to 9, wherein the virtual item call play platform is implemented by a call play platform of the ring back tone service, implemented by a call play platform of the customized ringing tone service, or implemented by a call play platform based on an internet protocol multimedia subsystem IMS voice service.

11. A call process implementation method, applied to a terminal, wherein the method comprises:
receiving a media data stream corresponding to a virtual item, wherein the virtual item comprises information about a user who gifts the virtual item, and an animation or a special effect of the virtual item; and
playing, by the terminal, media information corresponding to the virtual item in a call process, wherein the terminal is a terminal of a caller user of a call service or a terminal of a callee user of the call service.

12. The method according to claim 11, wherein the media data stream corresponding to the virtual item comprises at least one of the following content: the information about the user who gifts the virtual item, a name of the virtual item, blessing information, the animation of the virtual item, the special effect, a red packet, an interaction operation, or a closing operation.

13. The method according to claim 11 or 12, wherein the playing, by the terminal, media information corresponding to the virtual item specifically comprises:
playing, by the terminal, the media information corresponding to the virtual item in a call ringing and waiting period and/or a call period in which a call is connected.

14. The method according to any one of claims 11 to 13, wherein the media data stream corresponding to the virtual item comprises:
a media data stream of at least one virtual item, and a media data stream corresponding to a ring back tone service or a customized ringing tone service of the terminal.

15. The method according to any one of claims 11 to 14, wherein the receiving, by the terminal, a media data stream corresponding to a virtual item specifically comprises:
receiving, by the terminal, a converged data stream from a virtual item media service, wherein the converged data stream comprises the media data stream of the at least one virtual item, and further comprises the media data stream corresponding to the ring back tone service or the customized ringing tone service of the terminal.

16. The method according to any one of claims 11 to 15, wherein the receiving, by the terminal, a media data stream corresponding to a virtual item specifically comprises:
receiving, by the terminal, the media data stream corresponding to the virtual item from the virtual item media service through a data channel DC.

17. The method according to claim 16, wherein the method further comprises:
completing, by the terminal, data channel DC negotiation, and receiving, through the DC channel, a first application used to implement a virtual item service;
establishing, by the terminal, the DC channel with the virtual item media service; and
after receiving the media data stream corresponding to the virtual item through the DC channel, playing, by the terminal, the media information corresponding to the virtual item by using the first application.

18. The method according to any one of claims 11 to 17, wherein the method further comprises:
ordering or subscribing to, by the terminal, the virtual item service through a virtual item operation service platform, and setting information about a recipient user, to deliver the virtual item to a terminal of the recipient user.

19. The method according to any one of claims 11 to 18, wherein the method further comprises:
setting, by the terminal through the virtual item operation service platform, at least one of a quantity of virtual item delivery times, a delivery frequency, a delivery validity period, a delivery priority, and specified play, cyclic play, or random play of a plurality of virtual items.

20. The method according to any one of claims 11 to 19, wherein the virtual item service is implemented by an application server AS of the ring back tone service, implemented by an AS of the customized ringing tone service, implemented by an AS based on an internet protocol multimedia subsystem IMS voice service, or implemented by an AS of the virtual item service.

21. A communication apparatus, wherein the communication apparatus comprises:
a transceiver unit, configured to receive a call request from a first terminal; and
a processing unit, configured to send the call request to a virtual item call play platform based on subscription information of a virtual item service of the terminal, wherein the call request is used to trigger delivery of a virtual item to the first terminal and/or a second terminal, and the second terminal is a terminal of a callee user corresponding to the call request.

22. The apparatus according to claim 21, wherein subscription information of the virtual item is generated based on a virtual item service to which a user subscribes.

23. The apparatus according to claim 21 or 22, wherein the transceiver unit is further configured to: receive a response message for a callee ring from the second terminal; and
send the response message for the callee ring to the virtual item call play platform.

24. A communication apparatus, wherein the communication apparatus comprises:
a transceiver unit, configured to receive a call request, wherein the call request is used to trigger delivery of a virtual item to a terminal, and the terminal is a terminal of a caller user corresponding to the call request or a terminal of a callee user corresponding to the call request, wherein
the transceiver unit is further configured to send a media data stream corresponding to the virtual item to the terminal, wherein the media data stream corresponding to the virtual item is determined based on a virtual item delivery task of the terminal.

25. The apparatus according to claim 24, wherein if the terminal is the terminal of the caller user of the call request and subscribes to a ring back tone service, the media data stream corresponding to the virtual item comprises a media data stream of at least one virtual item, and further comprises the ring back tone service of the terminal; or
if the terminal is the terminal of the callee user of the call service and subscribes to a customized ringing tone service, the media data stream corresponding to the virtual item comprises a media data stream of at least one virtual item, and further comprises a media data stream corresponding to the customized ringing tone service.

26. The apparatus according to claim 24 or 25, wherein the communication apparatus further comprises:
a processing unit, configured to perform real-time transcoding and overlaying on a plurality of media data streams corresponding to the terminal to obtain a visual media data stream and/or an audio data stream, wherein the visual media data stream comprises a visual media data stream of at least one virtual item and a visual media data stream corresponding to the ring back tone service or the customized ringing tone service of the terminal, and the audio data stream comprises an audio data stream of at least one virtual item and an audio data stream corresponding to the ring back tone service or the customized ringing tone service of the terminal; and
the transceiver unit is specifically configured to send the visual media data stream and/or the audio data stream to the terminal.

27. The apparatus according to claim 24 or 25, wherein the transceiver unit is specifically configured to send the media data stream corresponding to the virtual item to the terminal through a data channel DC.

28. The apparatus according to claim 27, wherein the transceiver unit is specifically configured to: complete data channel DC negotiation with the terminal, and send, to the terminal through the DC channel, a first application used to implement a virtual item service; and
establish the DC channel with the terminal, to send the media data stream corresponding to the virtual item to the terminal.

29. A communication apparatus, wherein the communication apparatus comprises:
a transceiver unit, configured to receive a media data stream corresponding to a virtual item, wherein the virtual item comprises information about a user who gifts the virtual item, and an animation or a special effect of the virtual item, and the communication apparatus is a recipient of the virtual item; and
a processing unit, configured to play media information corresponding to the virtual item in a call process, wherein the communication apparatus is a terminal of a caller user of the call service or a terminal of a callee user of the call service.

30. The apparatus according to claim 29, wherein the media data stream corresponding to the virtual item comprises at least one of the following content: the information about the user who gifts the virtual item, a name of the virtual item, blessing information, the animation of the virtual item, the special effect, a red packet, an interaction operation, or a closing operation.

31. The apparatus according to claim 29 or 30, wherein the processing unit is configured to play the media information corresponding to the virtual item in a call ringing and waiting period and/or a call period in which a call is connected.

32. A communication apparatus, wherein the apparatus comprises a processor, the processor is coupled to a memory, the memory is configured to store a program or instructions, and when the program or the instructions is/are executed by the processor, the apparatus is enabled to perform the method according to any one of claims 1 to 20.

33. A computer-readable storage medium, wherein the readable storage medium stores instructions, and when the readable storage medium runs on an electronic device, the electronic device is enabled to perform the method according to any one of claims 1 to 20.

34. A computer program product comprising instructions, wherein when the computer program product runs on a computer, the computer is enabled to perform the method according to any one of claims 1 to 20.

35. A chip, wherein the chip is coupled to a memory, and is configured to read and execute program instructions stored in the memory, to implement the method according to any one of claims 1 to 20.

36. A communication system, wherein the communication system comprisesthe communication apparatus according to any one of claims 21 to 23, the communication apparatus according to any one of claims 24 to 28, and the communication apparatus according to any one of claims 29 to 31.
